# EUROPEAN PATENT SPECIFICATION

(11) **EP 4 199 207 B1**
(45) Date of publication and mention of the grant of the patent: **29.01.2025**
(21) Application number: 21876742.4
(22) Date of filing: 20.10.2021
(51) Int. Cl.: H01M 50/188, H01M 50/184, H01M 50/176, H01M 50/528, H01M 50/548, H01M 50/533, H01M 50/107, H01M 50/559, H01M 50/567, H01M 50/179

(54) **BATTERY CELL, METHOD AND SYSTEM FOR MANUFACTURING A BATTERY CELL, BATTERY AND ELECTRICAL DEVICE**
BATTERIEZELLE, VERFAHREN UND SYSTEM ZUR HERSTELLUNG EINER BATTERIEZELLE, BATTERIE UND ELEKTRISCHE VORRICHTUNG
ÉLÉMENT DE BATTERIE, PROCÉDÉ ET SYSTÈME DE FABRICATION D'UN ÉLÉMENT DE BATTERIE, BATTERIE ET DISPOSITIF ÉLECTRIQUE

(43) Date of publication of application: 21.06.2023
(60) Divisional application: 24215115.7
(73) Proprietor: Contemporary Amperex Technology (Hong Kong) Limited, Central, Central And Western District (HK)
(72) Inventor: FANG, Kun, Ningde City, Fujian 352100 (CN); GUO, Zhijun, Ningde City, Fujian 352100 (CN)
(74) Representative: Valea AB
(86) International application number: PCT/CN2021/125077
(87) International publication number: WO 2023/065173

(56) References cited:
- EP-A1- 3 748 732
- EP-A1- 3 764 418
- WO-A1-2012/169055
- CN-A- 107 026 248
- CN-U- 207 800 665
- JP-A- 2014 072 190
- JP-A- 2018 139 190
- US-A1- 2003 124 420
- US-A1- 2008 057 394
- US-A1- 2017 214 030

## Description

### TECHNICAL FIELD

The present application relates to the technical field of batteries, and in particular, to a battery cell, a method and a system for manufacturing a battery cell, a battery and an electrical device.

### BACKGROUND

Battery cells are widely used in electronic equipment, such as a mobile phone, a notebook computer, a battery car, an electric vehicle, an electric plane, an electric ship, an electric toy car, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of battery technology, how to improve the assembling process of battery cells has been a research orientation in the industry.

Document 1 (EP 3764418 A1) relates to a cap assembly (20) and a secondary battery (10). The cap assembly includes: a cap plate (30) including a main portion (31) and a convex portion (32), wherein the main portion includes a first surface (311), a second surface (312) and an electrode lead-out hole (313); an electrode terminal (52) including an extension portion (52a) that extends beyond a hole wall of the hole, which extends in a circumferential direction to form a ring structure and is arranged on a side of the first surface away from the second surface; and a sealing ring (40) at least partially disposed between the extension portion and the main portion. The convex portion is disposed on the second surface and around the electrode lead-out hole and has a thickness of 0.01 mm to 2 mm. A top surface of the convex portion extends out of the second surface.

Document 2 (US 2017/0214030 A1) relates to an energy storage device provided with external terminals, and a method of manufacturing the energy storage device. A first projecting portion is disposed between a head portion of an external terminal and a gasket body of a gasket, the first projecting portion projecting toward the gasket body from a first opposedly-facing surface which opposedly faces a case of the head portion, the first projecting portion surrounding the shaft portion, the first projecting portion having a pressing surface which directly or indirectly presses the gasket body in a projecting direction of the first projecting portion. The gasket has the second and third opposedly-facing surfaces, the second opposedly-facing surface opposedly facing the head portion, the third opposedly-facing surface opposedly facing the case. A second projecting portion is disposed in a region of at least one of the second and third opposedly-facing surfaces which correspond to the first projecting portion, the second projecting portion surrounding the shaft portion and being in a state where the second projecting portion is compressed toward the second or third opposedly-facing surface by the pressing surface.

Document 3 (EP 3748732 A1) provides a secondary battery. The secondary battery includes: a case including an opening; a top cover assembly including a top cover plate and an electrode terminal, the top cover plate covering the opening and including an electrode lead-out hole corresponding to the electrode terminal; an electrode assembly received in the case, the electrode assembly including a main body and a tab, the tab extending out from a side of the main body close to the top cover plate and being bent relative to a thickness direction of the top cover plate to form a bent portion; and a current collecting wiring board disposed between the top cover plate and the main body, the current collecting wiring board including a first connection portion, a second connection portion, and a transition portion connected between the first connection portion and the second connection portion, the first connection portion and the second connection portion extending along a width direction of the top cover plate and are provided opposite to each other, the first connection portion being connected with the electrode terminal, and the second connection portion being connected with the bent portion.

### SUMMARY

The present application provides a battery cell, according to the independent claim 1 and a battery, according to the independent claim 17. The preferable embodiments are covered by the dependent claims.

In the invention, a battery cell is provided, according to the independent claim 1, which includes: an electrode assembly including a first tab; a casing for accommodating the electrode assembly, the casing including a wall provided with an electrode lead-out hole; an electrode terminal mounted at the electrode lead-out hole; and a current collecting member positioned between the wall and the first tab and configured to connect the electrode terminal and the first tab. A first recess is provided at an end of the electrode terminal that faces the first tab, a side wall of the first recess is bent outward so that the electrode terminal is fixed to the wall, the current collecting member is abutted against and connected to a bottom surface of the first recess, and the bottom surface of the first recess is a flat surface. The electrode terminal includes: a limiting portion positioned on the side of the wall that is away from the first tab; a body portion being connected to a surface of the limiting portion that faces the wall and passing through the electrode lead-out hole, an end of the body portion that faces the first tab being provided with the first recess and a folded edge structure, the folded structure being formed by bending the side wall of the first recess outward. The limiting portion and the folded edge structure are configured to clamp a part of the side wall to fix the electrode terminal to the wall. The current collecting member includes a first current collecting portion and a second current collecting portion connected to the first current collecting portion. The first current collecting portion is configured to be connected to the first tab to realize an electrical connection between the current collecting member and the first tab. The second current collecting portion is configured to be connected to the electrode terminal to realize an electrical connection between the current collecting member and the electrode terminal. The second current collecting portion protrudes from a surface of the first current collecting portion that faces the electrode terminal, to extend into the first recess and abut against the bottom surface of the first recess.

In the above solution, the first recess is provided at the end of the electrode terminal that faces the first tab and the side wall of the first recess is bent outward so that the electrode terminal is fixed to the wall of the casing. The squeezed part of the electrode terminal is the side wall of the first recess, and the side wall of the first recess is a wall-shaped structure and is easy to be bent, so that the pressure to which the electrode terminal is subjected during the shaping process can be reduced, stress concentration can be reduced, and mounting difficulty of the electrode terminal can be reduced. During the process of fixing the electrode terminal to the wall, the side wall of the first recess is squeezed by the external device, so that the risk of the bottom surface of the first recess being deformed during the bending of the side wall of the first recess can be reduced, thereby ensuring the close contact of the current collecting member with the bottom surface of the first recess and improving the connection strength between the current collecting member and the electrode terminal.

In the above solution, in the assembling of the casing and the electrode terminal, the body portion may be inserted into the casing from the outside of the casing, and the limiting portion may limit the position of the electrode terminal from the outside. After the body portion is inserted into the casing, the side wall of the first recess is bent outward to form the folded edge structure. The folded edge structure and the limiting portion respectively clamp the wall from the two sides of the wall, so as to fix the electrode terminal to the wall.

In some embodiments, in the radial direction of the wall, the size of the limiting portion is larger than the size of the folded edge structure.

In the above solution, the limiting portion may have a relative large size in the radial direction, which facilitates the assembling of the limiting portion and the external bus component, increases the connection area between the limiting portion and the bus components, and improves the current flow allowance. The folded edge structure has a relatively small size in the radial direction, so that the pressure required for the shaping of the folded edge structure by bending can be reduced, and the difficulty of the shaping of the folded edge structure by bending can be reduced.

In some embodiments, in the radial direction of the wall, a thickness of at least a part of the folded edge structure that extends from an outer end surface of the folded edge structure gradually increases from an outer side to an inner side of the folded edge structure.

In the above solution, during the shaping of the folded edge structure, the portion of the folded edge structure that is close to the outer end surface is pressed first, and the portion of the folded edge structure that is close to the outer end surface is relatively thin and easier to bend, which can reduce the difficulty of shaping the folded edge structure.

In the above solution, at least part of the surface of the folded edge structure that faces the first tab is an inclined surface connected to the outer end surface and inclined toward the electrode assembly.

In the above solution, the inclined surface is provided, so that the thickness of at least a part of the folded edge structure extending from the outer end surface can be gradually increased from the outer side to the inner side of the folded edge structure. Before the folded edge structure is shaped, the inclined surface is a part of the inner wall surface of the side wall of the first recess, which can serve as a guide so that external devices can extend into the first recess.

In some embodiments, in the thickness direction of the wall, the bottom surface of the first recess is closer to the first tab than the inner surface of the wall.

During the process of bending the side wall of the first recess, the portion of the side wall of the first recess that is close to the bottom surface of the first recess will be deformed. If the bottom surface of the first recess is level with the inner surface of the wall, or the bottom surface of the first recess is farther away from the first tab 11 than the inner surface of the wall, then the side wall of the first recess may press against the hole wall surface of the electrode lead-out hole when bent, causing the risk of deformation of the wall. In the above solution, the bottom surface of the first recess is closer to the first tab than the inner surface of the wall, so as to reduce the pressure exerted on the wall by the side wall of the first recess during the bending process, thereby reducing the risk that the wall is damaged by pressure.

In some embodiments, the battery cell further includes a sealing member disposed between the wall and the electrode terminal and configured to seal the electrode lead-out hole.

In the above solution, the sealing member is provided to seal the electrode lead-out hole, which can improve the sealing performance of the battery cell, reduce the risk of electrolyte leakage, and improve the safety of the battery cell.

In some embodiments, the sealing member includes a first sealing portion surrounding the outside of the body portion and positioned between the wall and the limiting portion. The electrode terminal further includes a first protrusion protruding from a surface of the limiting portion that faces the first sealing portion and surrounding the body portion, and the first protrusion is configured to press against the first sealing portion to seal the electrode lead-out hole; and/or the sealing member further includes a second protrusion protruding from a surface of the first sealing portion that faces the limiting portion and surrounding the body portion, and the second protrusion is configured to press against the limiting portion to seal the electrode lead-out hole.

In the above solution, the first protruding portion protrudes from the limiting portion. When the first sealing portion is clamped by the limiting portion and the wall, the first protruding portion can be embedded in the first sealing portion, thereby increasing the local compression of the first sealing portion and improving the sealing performance. The second protrusion protrudes from the first sealing portion. When the limiting portion and the wall clamp the first sealing portion, the limiting portion compresses both the second protrusion and the first sealing portion, thereby increasing the compression of the sealing member at the second protrusion and improves the sealing performance.

In some embodiments, a projection of the first protrusion along the thickness direction of the wall lying within a projection of the folded edge structure along the thickness direction, and/or a projection of the second protrusion along the thickness direction of the wall lying within the projection of the folded edge structure along the thickness direction.

In the above solution, the projection of the first protrusion along the thickness direction of the wall is within the projection of the folded edge structure along the thickness direction, so that the first sealing portion can be clamped by the first protrusion and the folded edge structure from both sides, which increases the compression of the first sealing portion and improve the sealing performance. The projection of the second protrusion along the thickness direction of the wall is within the projection of the folded edge structure along the thickness direction, so that the second protrusion and the first sealing portion can be clamped by the limiting portion and the folded edge structure from both sides, which increases the compression of the sealing member at the second protrusion and improves the sealing performance.

In some embodiments, in the radial direction of the wall, a minimum distance between the first protrusion and the body portion is smaller than a minimum distance between the first protrusion and the outer edge of the limiting portion; and/or, in the radial direction of the wall, a minimum distance between the second protrusion and the body portion is smaller than a minimum distance between the second protrusion and the outer edge of the limiting portion.

In the above solution, the minimum distance between the first protrusion and the body portion is smaller than the minimum distance between the first protrusion and the outer edge of the limiting portion, which can reduce the torque received by the limiting portion, and reduce the risk of warping and deformation of the limiting portion. The minimum distance between the second protrusion and the body portion is smaller than the minimum distance between the second protrusion and the outer edge of the limiting portion, which can reduce the torque received by the limiting portion, and reduce the risk of warping and deformation of the limiting portion.

In some embodiments, the sealing member further includes a second sealing portion sleeved on the body portion and connected to the first sealing portion. A part of the second sealing portion is bent and folded outward under the squeezing of the folded edge structure and clamped between the wall and the folded edge structure.

In the above solution, the second sealing portion can not only improve the sealing performance, but also separate the body portion from the wall, so as to avoid direct contact and friction between the body portion and the wall, and reduce the risk of the generation of particle.

In some embodiments, the electrode assembly further includes a second tab having a polarity opposite to that of the first tab, and the second tab is electrically connected to the wall. The sealing member insulates and separates the wall from the electrode terminal.

In the above solution, the sealing member insulates and separates the wall from the electrode terminal, so that the wall and the electrode terminal may have different polarities, and the wall and the electrode terminal may serve as two output electrodes of the battery cell, which can simplify the structure of the battery cell, and ensure good current flow allowance of the battery cell. The wall and the electrode terminal are positioned at a same end of the battery cell, so that the bus components can be assembled to the same side of the battery cell, which can simplify the assembly process and improve the efficiency of assembling a plurality of battery cells into a group.

In the above solution, the first current collecting portion may be connected to the first tab to ensure a good connection strength and a good overcurrent capacity between the current collecting member and the first tab. The second current collecting portion protrudes from the first current collecting portion and can extend into the first recess and abut against the bottom surface of the first recess, thereby ensuring a close contact between the current collecting member and the bottom surface of the first recess, which ensures a good current flow allowance and a good connection strength between the electrode terminal and the current collecting member.

In some embodiments, a second recess is formed at a position of the current collecting member that corresponds to the second current collecting portion, and the second recess is recessed from a surface of the first current collecting portion that faces the first tab along a direction away from the first tab.

In the above solution, the second recess is provided, so that the strength of the second current collecting portion can be reduced, and the elastic deformation capability of the second current collecting portion can be improved. In the process of making the second current collecting portion be abutted against the bottom surface of the first recess, the second current collecting portion can release the stress through elastic deformation, reduce the stress transferred to the first tab, and reduce the risk of first tab being damaged by pressure.

In some embodiments, the first current collecting portion and the second current collecting portion are integrally formed.

In the above solution, the process of connecting the first current collecting portion to the second current collecting portion can be omitted, and the resistance therebetween can be reduced.

In some embodiments, the second current collecting portion is a non-hollow structure.

In the above solution, the second current collecting portion is provided as a non-hollow structure, which can improve the overcurrent capacity of the second current collecting portion. The second current collecting portion can be welded to the electrode terminal by means of resistance welding. During the process of resistance welding, the second current collecting portion of the non-hollow structure generates more heat, which facilitates the welding of the second current collecting portion to the electrode terminal, and reduces the difficulty of welding the second current collecting portion to the electrode terminal.

In some embodiments, the first current collecting portion and the second current collecting portion are independent structures from each other and are connected by welding.

In the above solution, the process of welding the first current collecting portion to the second current collecting portion is simple, which helps to save materials and reduce costs.

In some embodiments, in the thickness direction of the wall, the first current collecting portion is spaced apart from the electrode terminal.

In the assembling of the electrode terminal and the current collecting member, the second current collecting portion needs to press against the bottom surface of the first recess. If the first current collecting portion is also in contact with the electrode terminal, over-positioning occurs between the electrode terminal and the current collecting member, and it is difficult to ensure that the second current collecting portion is in close contact with the bottom surface of the first recess. In the above solution, the first current collecting portion is spaced apart from the electrode terminal to prevent the first current collecting portion from interfering with the second current collecting portion being abutted against the bottom surface of the first recess, so that a good connection strength between the current collecting member and the electrode terminal is ensured.

In some embodiments, the first current collecting portion is abutted against and welded to the first tab, and the second current collecting portion is abutted against and welded to the bottom surface of the first recess.

In the above solution, the welding can reduce the contact resistance between the first current collecting portion and the first tab and the contact resistance between the second current collecting portion and the electrode terminal, thereby improving the current flow allowance.

In some embodiments, the electrode assembly includes a winding center hole, the winding center hole is configured to be corresponding to a position of the second current collecting portion, and the winding center hole is configured to be penetrated by an external welding part to weld the second current collecting portion to the bottom surface of the first recess.

In the above solution, the winding center hole can provide a clearance space for the external welding part, so that the external welding part can pass through the electrode assembly and weld the second current collecting portion to the bottom surface of the first recess.

In some embodiments, conductive glue is provided in the first recess. The conductive glue connects the second current collecting portion and the electrode terminal to realize an electrical connection between the current collecting member and the electrode terminal.

In the above solution, the second current collecting portion and the electrode terminal are connected by the conductive glue, instead of welding the second current collecting portion to the electrode terminal, so that the difficulty for connecting the second current collecting portion to the electrode terminal can be lowered.

In some embodiments, the battery cell further includes an insulating sheet surrounding an outside of the second current collecting portion and being at least partially clamped between the first current collecting portion and the electrode terminal.

In the above solution, the insulating sheet clamped between the first current collecting portion and the electrode terminal is provided, so that the first recess can be sealed, and the risk of material leakage from the first recess can be reduced.

In some embodiments, the insulating sheet is elastic and is configured to be elastically deformed when squeezed by the first current collecting portion and the electrode terminal.

During the process of pressing the second current collecting portion against the bottom surface of the first recess, the electrode terminal squeezes the insulating sheet. In the above solution, the insulating sheet can be elastically deformed to prevent the insulating sheet from interfering with the second current collecting portion being abutted against the bottom surface of the first recess, which ensures a good connection strength between the current collecting member and the electrode terminal.

In some embodiments, a surface of the electrode terminal that departing away from the first tab is a flat surface.

In the above solution, the surface of the electrode terminal that faces away from the first tab can be used for connection with an external bus component, while the flat surface can ensure the close contact between the electrode terminal and the bus component, which simplifies the assembling of the electrode terminal and the bus component, and improves the connection strength and current flow allowance between the electrode terminal and the bus component.

In some embodiments, the bottom surface of the first recess is a flat surface.

In the above solution, the current collecting member is configured to be abutted against the bottom surface of the first recess, and the bottom surface of the first recess is provided to be a flat surface, so that the current collecting member can be in close contact with the bottom surface of the first recess, which improves the connection strength and current flow allowance therebetween.

In some embodiments, the casing includes a cover plate and a casing body. The casing body includes a casing side wall and a casing bottom wall that are integrally formed. The casing side wall surrounds the casing bottom wall. One end of the casing side wall is connected to the casing bottom wall, and the other end of the casing side wall encircles to form an opening opposite to the casing bottom wall. The cover plate covers the opening. The wall is the casing bottom wall or the cover plate.

In a second aspect, an embodiment of the present application provides a battery including a plurality of the battery cells according to any one of the embodiments in the first aspect.

In a third aspect, an embodiment of the present application provides an electrical device including the battery in the second aspect, where the battery is used to provide electrical power.

In a fourth aspect, an embodiment of the present application provides an method for assembling a casing body and an electrode terminal, which includes:
providing the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, and the casing bottom wall being provided with an electrode lead-out hole;
providing an electrode terminal, an end of the electrode terminal being provided with a first recess; and
mounting the electrode terminal at the electrode lead-out hole, making the end of the electrode terminal that is provided with the first recess extend into the casing body, and then bending a side wall of the first recess outward to fix the electrode terminal to the casing bottom wall.

In some embodiments, the bending the side wall of the first recess outward includes: making a first pressing block extend into the first recess and spreading the side wall of the first recess, to make the side wall of the first recess tilt outward; squeezing the side wall of the first recess by a second pressing block, to make the side wall of the first recess bend toward the casing bottom wall.

In the above solution, after the first pressing block extends into the first recess, the side wall of the first recess is gradually spread, so that the side wall of the first recess is inclined outward. After the side wall of the first recess is inclined outward, the second pressing block can more easily press against the inner wall surface of the side wall of the first recess, so that the side wall of the first recess can be bent along a preset direction.

In a fifth aspect, an embodiment of the present application provides an apparatus for assembling a casing body and an electrode terminal, which includes:
a first providing means for providing the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, and the casing bottom wall being provided with an electrode lead-out hole;
a second providing means for providing the electrode terminal 82, an end of the electrode terminal being provided with a first recess; and
a first assembling part for mounting the electrode terminal at the electrode lead-out hole, making the end of the electrode terminal that is provided with the first recess extend into the casing body, and then bending a casing side wall of the first recess outward to fix the electrode terminal to the casing bottom wall.

In some embodiments, the first assembling part includes a first pressing block and a second pressing block. The first pressing block is configured to extend into the first recess and spread the side wall of the first recess to make the side wall of the first recess tilt outward. The second pressing block is configured to squeeze the side wall of the first recess to make the side wall of the first recess bend toward the casing bottom wall.

In the above solution, after the first pressing block extends into the first recess, the side wall of the first recess is gradually spread, so that the side wall of the first recess is inclined outward. After the side wall of the first recess is inclined outward, the second pressing block can more easily press against the inner wall surface of the side wall of the first recess, so that the side wall of the first recess can be bent along a preset direction.

In a sixth aspect, an embodiment of the present application provides a method for manufacturing a battery cell, including:
providing a casing body and an electrode terminal, the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, the casing bottom wall being provided with an electrode lead-out hole, providing a first recess on an end of the electrode terminal that extends into the casing body, bending and folding the first recess outward so as to fix the electrode terminal at the casing bottom wall;
providing an electrode assembly including a first tab;
providing a current collecting member and connecting the current collecting member to the first tab;
mounting the electrode assembly and the current collecting member in the casing body and making the current collecting member be abutted against and connected to a bottom surface of the first recess, the current collecting member being positioned between the casing bottom wall and the first tab.

In some embodiments, the electrode assembly includes a winding center hole. The making the current collecting member be abutted against and connected to a bottom surface of the first recess includes putting a welding part into the casing body from the opening and making the welding part passing through the winding center hole to weld the current collecting member to the bottom surface of the first recess.

In the above solution, the winding center hole can provide a clearance space for the external welding part, so that the external welding part can pass through the electrode assembly and weld the current collecting member to the bottom surface of the first recess.

In a seventh aspect, an embodiment of the present application provides a system for manufacturing a battery cell, including:
a third providing means for providing a casing body and an electrode terminal, the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, the casing bottom wall being provided with an electrode lead-out hole, providing a first recess on an end of the electrode terminal that extends into the casing body, bending and folding the first recess outward so as to fix the electrode terminal at the casing bottom wall;
a fourth providing means for providing an electrode assembly including a first tab;
a fifth providing means for providing a current collecting member and connecting the current collecting member to the first tab;
a second assembling part for mounting the electrode assembly and the current collecting member in the casing body and making the current collecting member be abutted against and connected to a bottom surface of the first recess, the current collecting member being positioned between the casing bottom wall and the first tab.

In some embodiments, the electrode assembly includes a winding center. The second assembly part includes a welding part configured to enter the casing body from the opening and pass through the winding center hole to weld the current collecting member to the bottom surface of the first recess.

In the above solution, the winding center hole can provide a clearance space for the external welding part, so that the external welding part can pass through the electrode assembly and weld the current collecting member to the bottom surface of the first recess.

### BRIEF DESCRIPTION OF THE DRAWINGS

The drawings necessary for explaining embodiments are described briefly below to illustrate the technical solutions of the embodiments of the present application more clearly. Obviously, the drawings described below are merely some embodiments of the present application. Other figures can be obtained by those with ordinary skill in the art from those drawings without any creative work.
Fig. 1 is a schematic structural diagram of a vehicle according to some embodiments of the present application.
Fig. 2 is an exploded schematic diagram of a battery according to some embodiments of the present application.
Fig. 3 is an exploded schematic diagram of the battery module shown in Fig. 2.
Fig. 4 is a schematic cross-sectional view of a battery cell according to some embodiments of the present application.
Fig. 5 is an enlarged schematic view of the portion of the battery cell at the circle A shown in Fig. 4.
Fig. 6 is an enlarged schematic view of the portion at the block B shown in Fig. 5.
Fig. 7 is a schematic structural diagram of the casing body and the electrode terminal shown in Fig. 4 before assembly.
Fig. 8 is an enlarged schematic view of the portion at the circle C shown in Fig. 7.
Fig. 9 is a partial cross-sectional schematic diagram of a battery cell according to some other embodiments of the present application.
Fig. 10 is a partial cross-sectional schematic diagram of a battery cell according to yet some other embodiments of the present application.
Fig. 11 is a schematic flowchart of a method for assembling a casing body and an electrode terminal according to some embodiments of the present application.
Fig. 12 is a schematic block diagram of an assembly apparatus including a casing body and an electrode terminal according to some embodiments of the present application.
Fig. 13 is a schematic flowchart of a method for manufacturing a battery cell according to some embodiments of the present application.
Fig. 14 is a schematic block diagram of a system for manufacturing a battery cell according to some embodiments of the present application.

In the drawings, the drawings are not drawn to actual scale.

### DETAILED DESCRIPTION

In order to make the objects, technical solutions and advantages of the embodiments of the present application more clear, the technical solutions in embodiments of the present application will be described clearly in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "including" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various places in the description are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, and may also refer to a detachable connection, or an integral connection; it may refer to a direct connection, and may also refer to an indirect connection through an intermediate medium, or an internal communication between two components. For those of ordinary skill in the art, the specific meanings of the above-mentioned terms in the present application can be understood in accordance with specific conditions.

Term "and/or" in the present application, is only a kind of association relationship that describes associated objects, and indicates that there can be three kinds of relationships. For example, A and/or B may indicate the following three cases: A exists alone, A and B exist simultaneously, and B exists alone. In addition, the character "/" in the present application generally indicates that the related objects have an "or" relationship.

In the embodiments of the present application, the same reference numerals denote the same components, and for brevity, in different embodiments, detailed descriptions of the same components are omitted. It should be understood that dimensions, such as a thickness, a length and a width, etc., of various components in the embodiments of the present application shown in the drawings, as well as an overall thickness, a length and a width, etc. of an integrated device are only exemplary descriptions, and should not constitute any limitation to the present application.

The "plurality" that appears in the present application refers to two or more (including two).

In the present application, the battery cells may include a lithium ion secondary battery cell, a lithium ion primary battery cell, a lithium sulfur battery cell, a sodium lithium ion battery cell, a sodium ion battery cell or a magnesium ion battery cell, etc., which are not limited in the embodiments of the present application. The battery cell may be in the shape of a cylinder, a flat body, a cuboid, or other shapes, which are not limited in the embodiments of the present application.

A battery mentioned in the embodiments of the present application refers to a single physical module including one or more battery cells to provide a higher voltage and capacity. For example, the battery mentioned in the present application may include a battery module, a battery pack, or the like. A battery typically includes a box body for enclosing one or more battery cells. The box body may prevent liquids or other foreign objects from affecting the charging or discharging of the battery cells.

A battery cell includes an electrode assembly and electrolyte, and the electrode assembly includes a positive electrode plate, a negative electrode plate and a separator. The operation of the battery cell mainly relies on a movement of metal ions between the positive electrode plate and the negative electrode plate. The positive electrode plate includes a positive electrode current collector and a positive electrode active material layer, and the positive electrode active material layer is coated on a surface of the positive electrode current collector. The positive electrode current collector includes a positive electrode current-collecting portion and a positive electrode tab connected with the positive electrode current-collecting portion, where the positive electrode current-collecting portion is coated with the positive electrode active material layer, and the positive electrode tab is not coated with the positive electrode active material layer. Taking a lithium ion battery as an example, a material of the positive electrode current collector may be aluminum, the positive electrode active material layer includes a positive electrode active material. The positive electrode active material may be lithium cobalt oxide, lithium iron phosphate, ternary lithium or lithium manganate, etc. The negative electrode plate includes a negative electrode current collector and a negative electrode active material layer, and the negative electrode active material layer is coated on a surface of the negative electrode current collector. The negative electrode current collector includes a negative electrode current-collecting portion and a negative electrode tab connected with the negative electrode current-collecting portion, where the negative electrode current-collecting portion is coated with the negative electrode active material layer, and the negative electrode tab is not coated with the negative electrode active material layer. A material of the negative electrode current collector may be copper, the negative electrode active material layer includes a negative electrode active material, and the negative electrode active material may be carbon or silicon, and the like. A material of the separator may be PP (polypropylene), PE (polyethylene), or the like.

The battery cell further includes a casing for accommodating the electrode assembly, an electrode terminal mounted to the casing, and a current collecting member for electrically connecting the electrode terminal and the electrode plate of the electrode assembly.

In the related art, in assembling the casing and the electrode terminal, first the electrode terminals are usually inserted into an electrode lead-out hole of the casing from the inner side of the casing, so that an outer end of the electrode terminal is protruded to the outside of the casing, and then a limiting structure is formed by pressing the outer end of the electrode terminal to fix the electrode terminal to the casing. However, the inventor found that when the electrode terminal is pressed, the outer surface of the electrode terminal will be uneven, and when a plurality of battery cells are assembled into a group using a bus component, it is likely to cause poor contact between the electrode terminal and the bus component, which affects the current flow allowance. In addition, the outer end of the electrode terminal needs to pass through the electrode lead-out hole, which limits the size of the outer end of the electrode terminal, and leads to a small connection area between the electrode terminal and the bus component, which affects the current flow allowance.

The inventor attempted to insert the electrode terminal into the electrode lead-out hole from the outside of the casing, and press the inner end of the electrode terminal to form a limiting structure, so as to fix the electrode terminal to the casing. In this way, the outer end of the electrode terminal does not need to be shaped by squeezing, and the flatness thereof can be ensured, thereby ensuring the connection strength and the current flow allowance of the electrode terminal and the bus component. The outer end of the electrode terminal does not need to pass through the electrode lead-out hole, and it can have a relatively large size, which can increase a connection area between the electrode terminal and the bus component and ensure the current flow allowance.

However, the inventor found through further research that the inner end of the electrode terminal needs to be connected to the current collecting member. If the inner end of the electrode terminal is shaped by squeezing, the connection between the electrode terminal and the current collecting member will be affected. In addition, if the limiting structure is formed by directly squeezing the inner end of the electrode terminal, the pressure requirement is too large, and if the pressure is too high, there is a risk that the casing or other components in the casing are likely to be damaged by the pressure.

In view of this, the embodiments of the present application provide a technical solution in which a recess is provided at the inner end of the electrode terminal and a side wall of the recess is bent to fix the electrode terminal to the casing, which can reduce the mounting difficulty of the electrode terminal and reduce pressure received by the electrode terminal during the shaping process. The side wall of the recess is pressed by the electrode terminal, which can avoid the force on the bottom surface of the recess. In the technical solutions, the current collecting member is abutted against and connected to the bottom surface of the first recess, so that the close contact between the current collecting member and the electrode terminal can be ensured, and the connection strength between the current collecting member and the electrode terminal is improved.

The technical solutions described in the embodiments of the present application are applicable to a battery and an electrical device using a battery.

The electrical device may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, etc. The spacecraft includes an airplane, a rocket, a space shuttle, a spacecraft, etc. The electric toy includes a fixed or movable electric toy, such as a game console, an electric vehicle toy, an electric ship toy and an electric plane toy, etc. The electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, etc. There is no special limitation on the above-mentioned electrical device in the embodiments of the present application.

In the following embodiments, for the convenience of description, the electric device is taken as a vehicle for illustration.

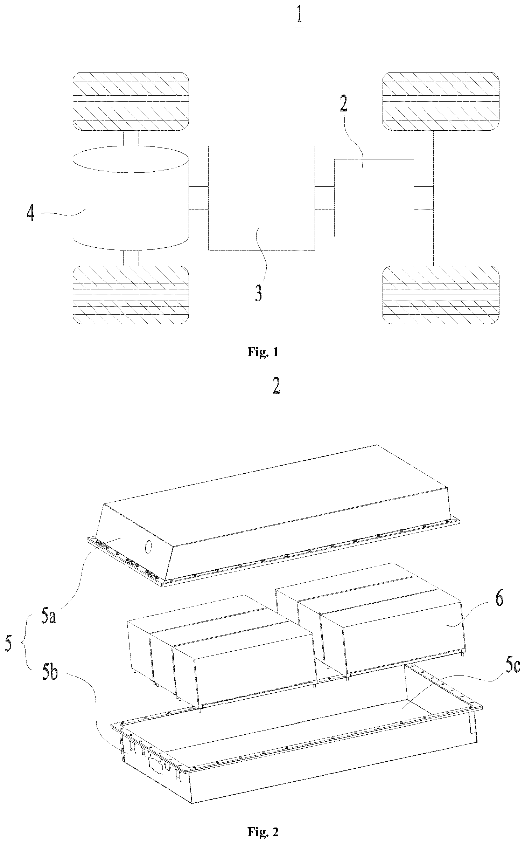

Fig. 1 is a schematic structural diagram of a vehicle according to some embodiments of the present application.

As shown in Fig. 1, a battery 2 is provided inside a vehicle 1. The battery 2 may be arranged at the bottom, the head or the rear of the vehicle 1. The battery 2 may be used for supplying power to the vehicle 1, for example, the battery 2 may be used as a manipulating power source of the vehicle 1.

The vehicle 1 may further include a controller 3 and a motor 4. The controller 3 is configured to control the battery 2 to supply power to the motor 4, for example, for satisfying work power demands in the starting, navigating, and driving of the vehicle 1.

In some embodiments of the present application, the battery 2 may not only be used as the manipulating power source of the vehicle 1, but may also be used as a driving power source of the vehicle 1 to provide driving power for the vehicle 1 instead of or partially instead of fuel or natural gas.

Fig. 2 is an exploded schematic diagram of a battery according to some embodiments of the present application. As shown in Fig. 2, the battery 2 includes a box body 5 and a battery cell (not shown in Fig. 2), and the battery cell is accommodated within the box body 5.

The box body 5 is used for accommodating the battery cell, and the box body 5 may be of various structures. In some embodiments, the box body 5 may include a first box body portion 5a and a second box body portion 5b. The first box body portion 5a and the second box body portion 5b may be covered by each other. The first box body portion 5a and the second box body portion 5b together define an accommodating space 5c for accommodating the battery cell. The second box body portion 5b may be a hollow structure with one open side. The first box body portion 5a is a plate-shaped structure. The first box body portion 5a covers the open side of the second box body portion 5b, so that the box body 5 having the accommodating space 5c is formed. Each of the first box body portion 5a and the second box body portion 5b may be a hollow structure with one open side, and the opening side of the first box body portion 5a covers the opening side of the second box body portion 5b, so that the box body 5 having the accommodating space 5c is formed. Of course, the first box body portion 5a and the second box body portion 5b may be in various shapes, such as a cylinder, a cuboid, and the like.

In order to improve a sealing performance after the first box body portion 5a and the second box body portion 5b are connected, a sealing member, such as sealant, a sealing ring, etc., may be provided between the first box body portion 5a and the second box body portion 5b.

Assuming that the first box body portion 5a covers the top of the second box body portion 5b, the first box body portion 5a may be referred to as an upper box cover plate, and the second box body portion 5b may be referred to as a lower box body.

In the battery 2, there may be one such battery cell or a plurality of such battery cells. If there are a plurality of such battery cells, the plurality of battery cells may be connected in series or in parallel or in a parallel-series connection. A parallel-series connection means that the connections between the plurality of battery cells include a series connection and a parallel connection. The plurality of battery cells may be directly connected in series or in parallel or in a parallel-series connection, and then a whole composed of the plurality of battery cells may be accommodated within the box body 5. Of course, the plurality of battery cells may also be connected in series or in parallel or in a parallel-series connection to form a battery module 6, and a plurality of battery modules 6 are then connected in series or in parallel or in a parallel-series connection to form a whole, and the whole is accommodated within the box body 5.

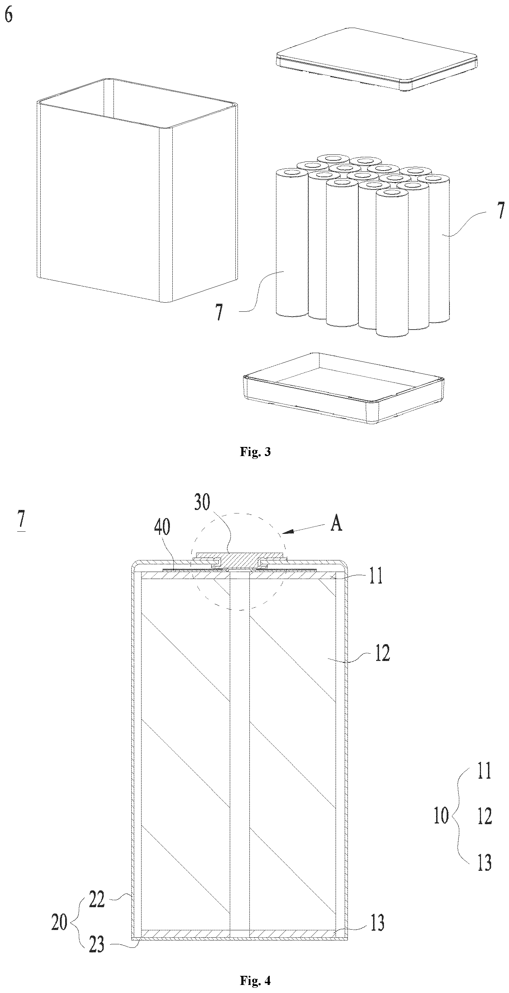

Fig. 3 is an exploded schematic diagram of the battery module shown in Fig. 2.

In some embodiments, as shown in Fig. 3, there are a plurality of battery cells 7, and the plurality of battery cells 7 are first connected in series or in parallel or in a parallel-series connection to form a battery module 6. A plurality of battery modules 6 are then connected in series or in parallel or in a parallel-series connection to form a whole, and the whole is accommodated in the box body.

The plurality of battery cells 7 in the battery module 6 may be electrically connected through a bus component, so as to realize a parallel connection, a series connection or a parallel-series connection of the plurality of battery cells 7 in the battery module 6.

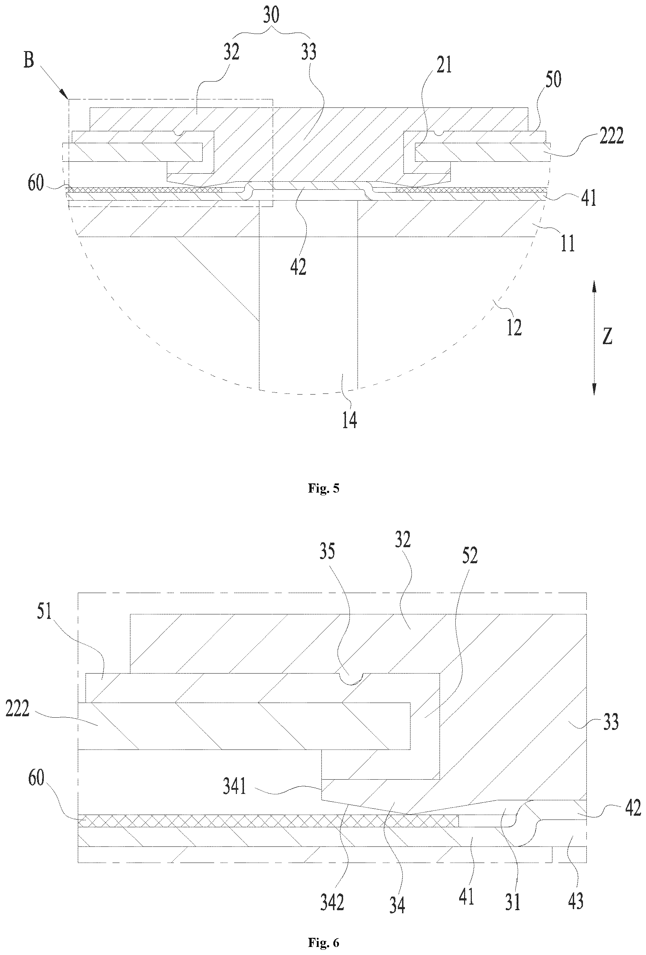

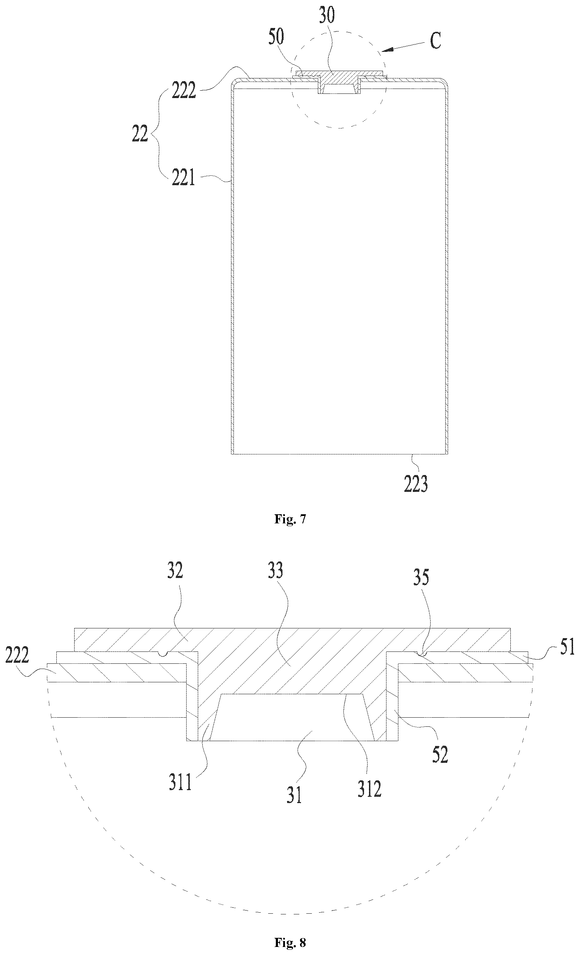

Fig. 4 is a schematic cross-sectional view of a battery cell according to some embodiments of the present application. Fig. 5 is an enlarged schematic view of the portion of the battery cell at the circle A shown in Fig. 4. Fig. 6 is an enlarged schematic view of the portion at the block B shown in Fig. 5. Fig. 7 is a schematic structural diagram of the casing body and the electrode terminal shown in Fig. 4 before assembly. Fig. 8 is an enlarged schematic view of the portion at the circle C shown in Fig. 7.

As shown in Fig. 4 to Fig. 8, the battery cell 7 of an embodiment of the present application includes: an electrode assembly 10 including a first tab 11; a casing 20 for accommodating the electrode assembly 10, the casing 20 including a wall provided with an electrode lead-out hole 21; an electrode terminal 30 mounted at the electrode lead-out hole 21; and a current collecting member 40 positioned between the wall and the first tab 11 and configured to connect the electrode terminal 30 to the first tab 11. The first recess 31 is provided at an end of the electrode terminal 30 that faces the first tab 11 and a side wall 311 of the first recess 31 is bent outward so that the electrode terminal 30 is fixed to the wall, and the current collecting member 40 is abutted against and connected to a bottom surface 312 of the first recess.

The electrode assembly 10 includes a first electrode plate, a second electrode plate, and a separator for separating the first electrode plate and the second electrode plate. The polarities of the first electrode plate and the second electrode plate are opposite. In other words, one of the first electrode plate and the second electrode plate is a positive electrode plate, and the other one of the first electrode plate and the second electrode plate is a negative electrode plate.

Optionally, the first electrode plate, the second electrode plate and the separator are all strip-shaped structures, and the first electrode plate, the second electrode plate and the separator are wound together to form a winding structure. The winding structure may be a cylinder structure, a flat structure, or a structure of other shapes.

Seen from the appearance of the electrode assembly 10, the electrode assembly 10 includes a main body portion 12, a first tab 11 and a second tab 13. The first tab 11 and the second tab 13 protrude from the main body portion 12. The first tab 11 is a portion of the first electrode plate that is not coated with the active material layer, and the second tab 13 is a portion of the second electrode plate that is not coated with the active material layer. Correspondingly, one of the first tab 11 and the second tab 13 is a tab with positive polarity, and the other is a tab with negative polarity.

The first tab 11 and the second tab 13 may extend outside from a same side of the main body portion 12, or may extend outside from opposite sides respectively. For example, the first tabs 11 and the second tabs 13 are provided on two sides of the main body portion 12, respectively. In other words, the first tabs 11 and the second tabs 13 are respectively provided on two ends of the electrode assembly 10.

The casing 20 is a hollow structure, and an accommodating cavity for accommodating the electrode assembly 10 and the electrolyte is formed inside the casing 20. The casing 20 may be in various shapes, for example, a cylinder, a cuboid, and the like. The shape of the casing 20 may be determined depending on the specific shape of the electrode assembly 10. For example, if the electrode assembly 10 is a cylinder structure, the casing 20 may be selected to be a cylindrical casing. If the electrode assembly 10 is a cuboid structure, the casing 20 may be selected to be a cuboid casing.

The casing 20 can be positively charged, negatively charged, or uncharged. When the casing 20 needs to be charged, the casing 20 may be directly connected to the tabs of the electrode assembly 10, or may be electrically connected to the tabs through other conductive members.

The casing 20 includes a casing body 22 and a cover plate 23. The casing body 22 has an opening, and the cover plate 23 covers the opening of the casing body 22 and forms a sealing connection, to form the accommodating cavity for accommodating the electrode assembly 10 and the electrolyte.

The casing body 22 may be a structure with an opening on open side, one cover plate 23 is provided, and the cover plate 23 covers the opening of the casing body 22. Alternatively, the casing body 22 may be a structure with openings on both sides, two cover plates 23 are provided, and the two cover plates 23 cover the two openings of the casing body 22 respectively.

In an embodiment of the present application, the wall is a part of the casing 20. For example, the wall may be the cover plate 23 or a part of the casing body 22.

The electrode lead-out hole 21 penetrates through the wall in a thickness direction Z of the wall, so that the electrode terminal 30 can extend inside the casing 20 and the electric power in the electrode assembly 10 can be extracted to the outside of the casing 20.

For example, the wall may be a plate-shaped structure, such as a flat plate-shaped structure.

The electrode terminal 30 may be provided on the wall in an insulating manner, or may be electrically connected to the wall, which is not limited in the embodiments of the present application, as long as the first tab 11 and the second tab 13 are prevented from being electrically connected.

When a plurality of battery cells 7 are assembled into a group, the electrode terminals 30 can be used for connection with the bus component to realize an electrical connection between the battery cells 7.

The current collecting member 40 may be connected to the first tab 11 by welding, abutting or bonding, etc., and connected to the electrode terminal 30 by welding, abutting, bonding, riveting, etc., so as to realize the electrical connection between the first tab 11 and the electrode terminal 30. The current collecting member 40 is made of a conductive material, for example, the current collecting member 40 is made of a conductive metal.

In the fabrication of the electrode terminal 30, a first recess 31 may be provided at an end of the electrode terminal 30 that is configured to extend into the casing 20. The first recess 31 may be formed by punching, milling or other processes.

In the assembling of the casing 20 and the electrode terminal 30, the electrode terminal 30 may extend into the casing body 22 from the outside of the casing 20. The end of the electrode terminal 30 that extends into the casing 20 is used to be connected to the first tab 11. After the electrode terminal 30 extending into the casing body 22, an external device can extend into the casing 20 and squeeze the side wall 311 of the first recess to bend the side wall 311 of the first recess outward. The side wall 311 of the first recess is snapped on the wall after being bent, so as to fix the electrode terminal 30 to the wall. In an example, after the side wall 311 of the first recess is shaped by bending, the electrode terminal 30 is riveted to the wall.

In the embodiments, the entire side wall 311 of the first recess may be bent outward, or only a part of the side wall 311 of the first recess may be bent outward.

During the process of fixing the electrode terminal 30 to the wall, the side wall 311 of the first recess is squeezed by the external device, so that the risk of the bottom surface 312 of the first recess being deformed during the bending of the side wall 311 of the first recess can be reduced.

The current collecting member 40 is abutted against the bottom surface 312 of the first recess. The bottom surface 312 of the first recess is not likely to be deformed during the shaping process of the electrode terminal 30, which can ensure that the close contact between the current collecting member 40 and the bottom surface 312 of the first recess, and improve the connection strength between the current collecting member 40 and the electrode terminal 30.

The current collecting member 40 may be connected to the bottom surface 312 of the first recess by pressing, bonding, welding or other manners.

In this embodiment, the first recess 31 is provided at the end of the electrode terminal 30 that faces the first tab 11, and the side wall 311 of the first recess is bent outward so that the electrode terminal 30 is fixed to the wall of the casing 20. The squeezed part of the electrode terminal 30 is the side wall 311 of the first recess, and the side wall 311 of the first recess is a wall-shaped structure and is easy to be bent, so that the pressure to which the electrode terminal 30 is subjected during the shaping process can be reduced, stress concentration can be reduced, and mounting difficulty of the electrode terminal 30 can be reduced. During the process of fixing the electrode terminal 30 to the wall, the side wall 311 of the first recess is squeezed by the external device, so that the risk of the bottom surface 312 of the first recess being deformed during the bending of the side wall 311 of the first recess can be reduced, thereby ensuring the close contact of the current collecting member 40 with the bottom surface 312 of the first recess and improving the connection strength between the current collecting member 40 and the electrode terminal 30.

In some embodiments, the casing 20 includes a cover plate 23 and a casing body 22. The casing body 22 includes a casing side wall 221 and a casing bottom wall 222 that are integrally formed. The casing side wall 221 surrounds the casing bottom wall 222. One end of the casing side wall 221 is connected to the casing bottom wall 222, and the other end of the casing side wall 221 encircles to form an opening 223 opposite to the casing bottom wall 222. The cover plate 23 covers the opening 223. The wall is the casing bottom wall 222 or the cover plate 23.

The casing body 22 is a hollow structure with an opening on one side. The cover plate 23 covers the opening of the casing body 22 and forms a sealing connection to form an accommodating cavity for accommodating the electrode assembly 10 and the electrolyte. The casing body 22 may be in various shapes, for example, a cylinder, a cuboid, and the like. The shape of the casing body 22 may be determined depending on the specific shape of the electrode assembly 10. For example, if the electrode assembly 10 is a cylinder structure, the casing body 22 may be selected to be a cylindrical casing body. If the electrode assembly 10 is a cuboid structure, the casing body 22 may be selected to be a cuboid casing body.

The casing side wall 221 is a cylinder structure, which surrounds the outside of the electrode assembly 10. The casing side wall 221 may be a round tube, a square tube or other shapes depending on the specific shape of the electrode assembly 10. The casing bottom wall 222 is a plate-shaped structure, and the shape of the bottom wall 222 corresponds to the shape of the casing side wall 221.

The casing side wall 221 and the casing bottom wall 222 are integrally formed, so that the connection process of the casing bottom wall 222 to the casing side wall 221 can be omitted, and the resistance therebetween can be reduced. For example, the casing body 22 may be formed by a stretching process.

The wall may be the casing bottom wall 222 or the cover plate 23, which is not limited in the embodiments.

In some embodiments, the cover plate 23 may be connected to the casing side wall 221 by welding. Optionally, the cover plate 23 and the casing body 22 may be made of a same material to ensure a good welding strength between the cover plate 23 and the casing side wall 221.

In some embodiments, a surface of the electrode terminal 30 that faces away from the first tab 11 is a flat surface.

The surface of the electrode terminal 30 that faces away from the first tab 11 is the end face of the end of the electrode terminal 30 that is away from the first tab 11, and the end face is exposed to the outside of the casing 20.

In this embodiment, the surface of the electrode terminal 30 that faces away from the first tab 11 can be used for connection with an external bus component, while the flat surface can ensure the close contact between the electrode terminal 30 and the bus component, which simplifies the assembling of the electrode terminal 30 and the bus component, and improves the connection strength and current flow allowance between the electrode terminal 30 and the bus component.

The bottom surface 312 of the first recess is a flat surface.

The current collecting member 40 is configured to be abutted against the bottom surface 312 of the first recess, and the bottom surface 312 of the first recess is provided to be a flat surface, so that the current collecting member 40 can be in close contact with the bottom surface 312 of the first recess, which improves the connection strength and current flow allowance therebetween.

In some embodiments, the first tab 11 is wound in multiple turns around the central axis of the electrode assembly 10, in other words, the first tab 11 includes multiple turns of tab layers. After the winding is completed, the first tab 11 is generally cylindrical, and a gap is left between two adjacent tab layers. In the embodiments of the present application, the first tab 11 may be processed to reduce the gap between the tab layers, so as to facilitate the connection between the first tab 11 and the current collecting member 40. For example, in an embodiment of the present application, the first tab 11 may be kneaded flat, to enable end regions of the first tab 11 that are away from the main body portion 12 to be gathered up and assembled together. The kneading process forms a dense end surface at an end of the first tab 11 away from the main body portion 12, reduces the gap between tab layers, and facilitates the connection of the first tab 11 with the current collecting member 40. Alternatively, in an embodiment of the present application, a conductive material may be filled between two adjacent turns of tab layers, so as to reduce the gap between the tab layers.

Optionally, the second tab 13 is wound around the central axis of the electrode assembly 10 in multiple turns, and the second tab 13 includes multiple turns of tab layers. In an example, the second tab 13 is also kneaded flat to reduce the gap between the tab layers of the second tab 13.

In some embodiments, the battery cell 7 is a cylindrical battery cell. Correspondingly, the electrode assembly 10 is a cylinder structure, and the casing side wall 221 is a round tube structure.

For the ease of describing the embodiments of the present application, in the drawings and the following description of the present application, the casing bottom wall 222 is taken as the wall of the casing 20.

The electrode terminal 30 includes: a limiting portion 32 positioned on the side of the wall that is away from the first tab 11; a body portion 33 connected to a surface of the limiting portion 32 that faces the wall and passing through the electrode lead-out hole 21, an end of the body portion 33 that faces the first tab 11 being provided with the first recess 31 and a folded edge structure 34 formed by bending the side wall 311 of the first recess outward. The limiting portion 32 and the folded edge structure 34 are configured to clamp a part of the wall to fix the electrode terminal 30 to the wall.

In the thickness direction Z of the wall, at least a portion of the limiting portion 32 overlaps with the wall, and at least a portion of the folded edge structure 34 overlaps with the wall. The limiting portion 32 and the folded edge structure 34 may directly clamp the wall, or may indirectly clamp the wall through other components.

The limiting portion 32 may be a plate-shaped structure, for example, the limiting portion 32 may be a flat plate structure, and the surface of the limiting portion 32 that faces away from the body portion 33 may be a flat surface. Before the folded edge structure 34 is formed, the body portion 33 may be a cylinder structure provided with the first recess 31, for example, the body portion 33 may be a cylinder structure.

In the assembling of the casing 20 and the electrode terminal 30, the body portion 33 may be inserted into the casing 20 from the outside of the casing 20, and the limiting portion 32 may limit the position of the electrode terminal 30 from the outside. After the body portion 33 is inserted into the casing 20, the side wall 311 of the first recess is bent outward to form the folded edge structure 34. The folded edge structure 34 and the limiting portion 32 respectively clamp the wall from the two sides of the wall, so as to fix the electrode terminal 30 to the wall.

In some embodiments, the side wall 311 of the first recess may be bent outwards according to the following steps: making a first pressing block extend into the first recess 31 and spreading the side wall 311 of the first recess, to make the side wall 311 of the first recess inclined outward; squeezing the side wall 311 of the first recess by a second pressing block, to make the side wall 311 of the first recess bend toward the wall.

For example, the first pressing block may be a tapered pressing block. When the first pressing block extends into the first recess 31, the side wall 311 of the first recess is gradually spread, so that the side wall 311 of the first recess is inclined outward. When the side wall 311 of the first recess is inclined outward, the second pressing block can more easily press against the inner wall surface of the side wall 311 of the first recess, so that the side wall 311 of the first recess can be bent along a preset direction.

In some embodiments, the first recess 31 is a tapered recess whose cross-sectional area gradually increases along the direction away from the limiting portion 32. The tapered recess allows easier insertion of the first pressing block.

In some embodiments, in the radial direction of the wall, the size of the limiting portion 32 is larger than the size of the folded edge structure 34.

The wall is a plate-shaped structure, which has a central axis. In the description of an embodiment of the present application, the radial direction of the wall is a direction perpendicular to the thickness direction Z of the wall and passing through the central axis.

The radial direction described in the present application is applicable to a rounded wall, and for a rounded wall, the radial direction of the wall may be the radial direction of the wall. Of course, the radial direction described in the present application may also be applied to a square wall or a wall of other shapes.

In this embodiment, the limiting portion 32 may have a relative large size in the radial direction, which facilitates the assembling of the limiting portion 32 and the external bus component, increases the connection area between the limiting portion 32 and the bus components, and improves the current flow allowance. The folded edge structure 34 has a relatively small size in the radial direction, so that the pressure required for the shaping of the folded edge structure 34 by bending can be reduced, and the difficulty of the shaping of the folded edge structure 34 by bending can be reduced.

In some embodiments, in the radial direction of the wall, a thickness of at least a part of the folded edge structure 34 that extends from an outer end surface 341 of the folded edge structure 34 gradually increases from an outer side to an inner side of the folded edge structure 34.

After the folded edge structure 34 is shaped, the outer end surface 341 is an outer peripheral surface disposed along the boundary of the folded edge structure 34. The folded edge structure 34 includes a thickness-varying region, and the thickness of the thickness-varying region gradually increases from the outer side to the inner side of the thickness-varying region. In other words, in the radial direction of the wall, the thickness of the thickness-varying region gradually decreases from the inner side to the outer side. The outer end face 341 is the end face of the thickness-varying region along the radial direction.

The entire folded edge structure 34 may be the thickness-varying region, that is, the entire thickness of the folded edge structure 34 tends to increase gradually from the outer side to the inner side of the folded edge structure 34. Of course, it may be the case that only a part of the folded edge structure 34 is the thickness-varying region with the thickness-varying region surrounding the outside of other regions of the folded edge structure 34.

Before the side wall 311 of the first recess is bent, the end of the side wall 311 of the first recess has an end surface surrounding the opening of the first recess 31. After the side wall 311 of the first recess is bent and the folded edge structure 34 is formed, the end surface of the side wall 311 of the first recess surrounding the opening of the first recess 31 moves outward and forms the outer end surface 341 of the folded edge structure 34.

In this embodiment, during the shaping of the folded edge structure 34, the portion of the folded edge structure 34 that is close to the outer end surface 341 is pressed first, and the portion of the folded edge structure 34 that is close to the outer end surface 341 is relatively thin and easier to be bent, which can reduce the difficulty of shaping the folded edge structure 34.

In some embodiments, at least part of the surface of the folded edge structure 34 that faces the first tab 11 is an inclined surface 342 connected to the outer end surface 341 and inclined toward the electrode assembly 10.

In this embodiment, the inclined surface 342 is provided, so that the thickness of at least a part of the folded edge structure 34 extending from the outer end surface 341 can be gradually increased from the outer side to the inner side of the folded edge structure 34. Before the folded edge structure 34 is shaped, the inclined surface 342 is a part of the inner wall surface of the side wall 311 of the first recess, which can serve as a guide so that external devices (for example, the first pressing block) can be extend the first recess 31.

In some embodiments, in the thickness direction Z of the wall, the bottom surface 312 of the first recess is closer to the first tab 11 than the inner surface of the wall.

The inner surface of the wall and the outer surface of the wall are disposed opposite to each other in the thickness direction Z, and the inner surface of the wall faces the first tab 11. The electrode lead-out hole 21 penetrates the wall, and the hole wall surface of the electrode lead-out hole 21 is connected to the inner surface of the wall and the outer surface of the wall. In the thickness direction Z, the bottom surface 312 of the first recess is closer to the first tab 11 than the inner surface of the wall, that is, the bottom surface 312 of the first recess is positioned outside the electrode lead-out hole 21.

During the process of bending the side wall 311 of the first recess, the portion of the side wall 311 of the first recess that is close to the bottom surface 312 of the first recess will be deformed. If the bottom surface 312 of the first recess is level with the inner surface of the wall, or the bottom surface 312 of the first recess is farther away from the first tab 11 than the inner surface of the wall (that is, the bottom surface 312 of the first recess is positioned within the electrode lead-out hole 21), then the side wall 311 of the first recess may press against the hole wall surface of the electrode lead-out hole 21 when bent, causing the risk of deformation of the wall.

In this embodiment, the bottom surface 312 of the first recess is closer to the first tab 11 than the inner surface of the wall, so as to reduce the pressure exerted on the wall by the side wall 311 of the first recess during the bending process, thereby reducing the risk that the wall is damaged by pressure.

In some embodiments, the battery cell 7 further includes a sealing member 50 disposed between the wall and the electrode terminal 30 and configured to seal the electrode lead-out hole 21.

In this embodiment, the sealing member 50 is provided to seal the electrode lead-out hole 21, which can improve the sealing performance of the battery cell 7, reduce the risk of electrolyte leakage, and improve the safety of the battery cell 7.

For example, the sealing member 50 is made of an elastic material, for example, the sealing member 50 may be made of rubber, polyvinyl chloride (pvc), or other materials.

In some embodiments, the sealing member 50 includes a first sealing portion 51 surrounding the outside of the body portion 33 and positioned between the wall and the limiting portion 32. The electrode terminal 30 further includes a first protrusion 35 protruding from a surface of the limiting portion 32 that faces the first sealing portion 51 and surrounding the body portion 33, and the first protrusion 35 is configured to press against the first sealing portion 51 to seal the electrode lead-out hole 21; and/or the sealing member 50 further includes a second protrusion (not shown) protruding from a surface of the first sealing portion 51 that faces the limiting portion 32 and surrounding the body portion 33, and the second protrusion is configured to press against the limiting portion 32 to seal the electrode lead-out hole 21.

In this embodiment, it may be the case that only the first protrusion 35 is provided, or only the second protrusion is provided, or both of the first protrusion 35 and the second protrusion are provided.

In some examples, the first protrusion 35 may be a 360° annular protrusion. In some other examples, the first protrusion 35 may not be a 360° enclosing annular protrusion. For example, the first protrusion 35 may be a 270° annular protrusion. In yet some other examples, the first protrusion 35 may further include a plurality of dot-shaped protrusions or line-shaped protrusions that are arranged at intervals and surround the body portion 33.

In some examples, the second protrusion may be a 360° annular protrusion. In some other examples, the second protrusion may not be a 360° enclosing annular protrusion. For example, the second protrusion may be a 270° annular protrusion. In yet some other examples, the second protrusion may further include a plurality of dot-shaped protrusions or line-shaped protrusions that are arranged at intervals and surround the body portion 33.

In this embodiment, the first protruding portion protrudes from the limiting portion 32. When the first sealing portion 51 is clamped by the limiting portion 32 and the wall, the first protruding portion can be embedded in the first sealing portion 51, thereby increasing the local compression of the first sealing portion 51 and improving the sealing performance. The second protrusion protrudes from the first sealing portion 51. When the limiting portion 32 and the wall clamp the first sealing portion 51, the limiting portion 32 compresses both the second protrusion and the first sealing portion 51, thereby increasing the compression of the sealing member 50 at the second protrusion and improves the sealing performance.

In some embodiments, a projection of the first protrusion 35 along the thickness direction Z of the wall is within a projection of the folded edge structure 34 along the thickness direction Z; and/or a projection of the second protrusion along the thickness direction Z of the wall is within the projection of the folded edge structure 34 along the thickness direction Z.

The above-mentioned projection is a projection on a plane. For example, the projection of the first protrusion 35 along the thickness direction Z of the wall refers to an orthographic projection of the first protrusion 35 along a first plane perpendicular to the thickness direction Z, and the projection of the folded edge structure 34 along the thickness direction Z refers to an orthographic projection of the folded edge structure 34 on the first plane.

After the limiting portion 32 compresses the first sealing portion 51, the folded edge structure 34 is configured to limit the position of the electrode terminal 30 from the inside, so as to prevent the limiting portion 32 from being spread under the action of the elastic force by the first sealing portion 51. For the first sealing portion 51, the portion of the first sealing portion 51 that corresponds to the folded edge structure 34 in the thickness direction Z is subjected to greater pressure.

In this embodiment, the projection of the first protrusion 35 along the thickness direction Z of the wall is within the projection of the folded edge structure 34 along the thickness direction Z, so that the first sealing portion 51 can be clamped by the first protrusion 35 and the folded edge structure 34 from both sides, which increases the compression of the first sealing portion 51 and improve the sealing performance.

In this embodiment, the projection of the second protrusion along the thickness direction Z of the wall is within the projection of the folded edge structure 34 along the thickness direction Z, so that the second protrusion and the first sealing portion 51 can be clamped by the limiting portion 32 and the folded edge structure 34 from both sides, which increases the compression of the sealing member 50 at the second protrusion and improve the sealing performance.

In some embodiments, in the radial direction of the wall, a minimum distance between the first protrusion 35 and the body portion 33 is smaller than a minimum distance between the first protrusion 35 and the outer edge of the limiting portion 32; and/or, in the radial direction of the wall, a minimum distance between the second protrusion and the body portion 33 is smaller than a minimum distance between the second protrusion and the outer edge of the limiting portion 32.

A first inner boundary line and a first outer boundary line are located where the first protrusion 35 and the limiting portion 32 are connected, and the first inner boundary line is located at an end of the first protrusion 35 that faces the body portion 33. A second external boundary is located where the body portion 33 and the limiting portion 32 are connected. The minimum distance between the first protrusion 35 and the body portion 33 in the radial direction is the minimum distance between the second outer boundary line and the first inner boundary line in the radial direction. For example, the minimum distance between the first protrusion 35 and the body portion 33 in the radial direction is a difference between the inner radius of the first protrusion 35 and the outer radius of the end of the body portion 33 that is connected to the limiting portion 32. The minimum distance between the first protrusion 35 and the outer edge of the limiting portion 32 in the radial direction is the minimum distance between the outer edge of the limiting portion 32 and the first outer boundary line in the radial direction. For example, the minimum distance between the first protrusion 35 and the outer edge of the limiting portion 32 in the radial direction is the difference between the outer radius of the limiting portion 32 and the outer radius of the first protrusion 35.

A second inner boundary line and a third outer boundary line are located where the second protrusion and the first sealing portion 51 are connected, and the second inner boundary line is located at an end of the second protrusion that faces the body portion 33. A second external boundary is located where the body portion 33 and the limiting portion 32 are connected. The minimum distance between the second protrusion and the body portion 33 in the radial direction is the minimum distance between the second outer boundary line and the second inner boundary line in the radial direction. For example, the minimum distance between the second protrusion and the body portion 33 in the radial direction is a difference between the inner radius of the second protrusion and the outer radius of the end of the body portion 33 that is connected to the limiting portion 32. The minimum distance between the second protrusion and the outer edge of the limiting portion 32 in the radial direction is the minimum distance between the outer edge of the limiting portion 32 and the third outer boundary line in the radial direction. For example, the minimum distance between the second protrusion and the outer edge of the limiting portion 32 in the radial direction is the difference between the outer radius of the limiting portion 32 and the outer radius of the second protrusion.

The first protrusion 35 presses against the first sealing portion 51 and exerts a supporting force on the limiting portion 32. In the radial direction of the wall, the smaller the distance between the first protrusion 35 and the body portion 33, the smaller the torque received by the limiting portion 32, and the less likely the outer edge of the limiting portion 32 to warp and deform. In contrast, the greater the distance between the first protrusion 35 and the body portion 33, the greater the torque received by the limiting portion 32, and the more likely the outer edge of the limiting portion 32 to warp and deform.

If the outer edge of the limiting portion 32 is warped and deformed, then when the limiting portion 32 is connected to the bus component, poor contact between the limiting portion 32 and the bus component is likely to occur, resulting in insufficient connection strength between the limiting portion 32 and the bus component.

In this embodiment, the minimum distance between the first protrusion 35 and the body portion 33 is smaller than the minimum distance between the first protrusion 35 and the outer edge of the limiting portion 32, which can reduce the torque received by the limiting portion 32, and reduce the risk of warping and deformation of the limiting portion 32.

When the limiting portion 32 and the folded edge structure 34 clamp the first sealing portion 51 and the second protrusion, the second protrusion exerts a supporting force on the limiting portion 32. In the radial direction of the wall, the smaller the distance between the second protrusion and the body portion 33, the smaller the torque received by the limiting portion 32, and the less likely the outer edge of the limiting portion 32 to warp and deform. In contrast, the greater the distance between the second protrusion and the body portion 33, the greater the torque received by the limiting portion 32, and the more likely the outer edge of the limiting portion 32 to warp and deform.

In this embodiment, the minimum distance between the second protrusion and the body portion 33 is smaller than the minimum distance between the second protrusion and the outer edge of the limiting portion 32, which can reduce the torque received by the limiting portion 32, and reduce the risk of warping and deformation of the limiting portion 32.

In some embodiments, the sealing member 50 further includes a second sealing portion 52 sleeved on the body portion 33 and connected to the first sealing portion 51. A part of the second sealing portion 52, with squeeze by the folded edge structure 34, is bent outward and clamped between the wall and the folded edge structure 34.

Before the folded edge structure 34 is shaped, the second sealing portion 52 is a tube-shaped structure sleeved on the body portion 33, and can extend into the electrode lead-out hole 21 together with the body portion 33. During the process of bending the side wall 311 of the first recess to form the folded edge structure 34, a part of the second sealing portion 52 is bent outward with the squeeze by the folded edge structure 34 and clamped between the wall and the folded edge structure 34.

In this embodiment, the second sealing portion 52 can not only improve the sealing performance, but also separate the body portion 33 from the wall, so as to avoid direct contact and friction between the body portion 33 and the wall, and reduce the risk of particle generation. In addition, the second sealing portion 52 can directly extend into the electrode lead-out hole 21 and be bent along with the formation of the folded edge structure 34, so that the sealing member 50 does not need to be integrated on the wall in advance, which can simplify the assembly process.

In some embodiments, the electrode assembly 10 further includes a second tab 13 having a polarity opposite to that of the first tab 11, and the second tab 13 is electrically connected to the wall. The sealing member 50 insulates and separates the wall from the electrode terminal 30.

The wall and the electrode terminal 30 may have different polarities, that is, the electrode terminal 30 and the wall may serve as two output electrodes of the battery cell 7, respectively. The casing 20 itself may be used as the output electrode of the battery cell 7, thereby eliminating a conventional electrode terminal 30 and simplifying the structure of the battery cell 7.

When the first tab 11 is the positive electrode tab and the second tab 13 is the negative electrode tab, the wall is the negative output electrode of the battery cell 7, and the electrode terminal 30 is the positive output electrode of the battery cell 7. When the first tab 11 is the negative electrode tab and the second tab 13 is the positive electrode tab, the wall is the positive output electrode of the battery cell 7, and the electrode terminal 30 is the negative output electrode of the battery cell 7.

In this embodiment, the sealing member 50 insulates and separates the wall from the electrode terminal 30, so that the wall and the electrode terminal 30 may have different polarities, and the wall and the electrode terminal 30 may serve as two output electrodes of the battery cell 7, which can simplify the structure of the battery cell 7, and ensure good current flow allowance of the battery cell 7. The wall and the electrode terminal 30 are positioned at a same end of the battery cell 7, so that the bus components can be assembled to the same side of the battery cell 7, which can simplify the assembly process and improve the efficiency of assembling a plurality of battery cells 7 into a group.

In some embodiments, the wall is the casing bottom wall 222.

The first tab 11 is positioned at the end of the electrode assembly 10 that faces the casing bottom wall 222, and the second tab 13 is positioned at the end of the electrode assembly 10 that faces the cover plate 23.

Optionally, the cover plate 23 is connected to each of the second tab 13 and the casing side wall 221, so as to electrically connect the second tab 13 to the casing bottom wall 222.

In some embodiments, the second tab 13 is a negative electrode tab, and a base material of the cover plate 23 and a base material of the casing body 22 are both steel. The casing body 22 is electrically connected to the negative electrode tab, so that the casing body 22 is in a low potential state, and the steel casing body 22 is not likely to be corroded by the electrolyte in the low potential state, which reduces safety risks.

The current collecting member 40 includes a first current collecting portion 41 and a second current collecting portion 42 connected to the first current collecting portion 41. The first current collecting portion 41 is configured to be connected to the first tab 11 to electrically connect the current collecting member 40 to the first tab 11. The second current collecting portion 42 is configured to be connected to the electrode terminal 30 to electrically connect the current collecting member 40 to the electrode terminal 30. The second current collecting portion 42 protrudes from a surface of the first current collecting portion 41 that faces the electrode terminal 30, to extend into the first recess 31 and abut against the bottom surface 312 of the first recess.

The first current collecting portion 41 and the second current collecting portion 42 may be integrally formed. Of course, the first current collecting portion 41 and the second current collecting portion 42 may be discrete structures, that is, the first current collecting portion 41 and the second current collecting portion 42 are two components provided separately, and they are joined together by bonding, welding, snapping or other manners.

The first current collecting portion 41 may be connected to the first tab 11 by welding, bonding or other manners. The first current collecting portion 41 is positioned between the wall and the first tab 11, and the first current collecting portion 41 may have a relatively large size to ensure an enough connection area between the first tab 11 and the current collecting member 40 and improve the current flow allowance.

The second current collecting portion 42 may be connected to the bottom surface 312 of the first recess by welding, bonding, or other manners.

The second current collecting portion 42 may be a non-hollow structure or a hollow structure.

In this embodiment, the first current collecting portion 41 may be connected to the first tab 11 to ensure a good connection strength and a good overcurrent capacity between the current collecting member 40 and the first tab 11. The second current collecting portion 42 protrudes from the first current collecting portion 41 and can extend into the first recess 31 and abut against the bottom surface 312 of the first recess, thereby ensuring a close contact between the current collecting member 40 and the bottom surface 312 of the first recess, which ensures a good current flow allowance and a good connection strength between the electrode terminal 30 and the current collecting member 40.

In some embodiments, the first current collecting portion 41 surrounds the outside of the second current collecting portion 42.

In some embodiments, a second recess 43 is formed at a position of the current collecting member 40 that corresponds to the second current collecting portion 42, and the second recess 43 is recessed from a surface of the first current collecting portion 41 that faces the first tab 11 along a direction away from the first tab 11.

In this embodiment, the second recess 43 is provided, so that the strength of the second current collecting portion 42 can be reduced, and the elastic deformation capability of the second current collecting portion 42 can be improved. In the process of making the second current collecting portion 42 be abutted against the bottom surface 312 of the first recess, the second current collecting portion 42 can release the stress through elastic deformation, reduce the stress transferred to the first tab 11, and reduce the risk of first tab 11 being damaged by pressure.

When the battery cell 7 vibrates, the second current collecting portion 42 can further serve as a buffer though elastic deformation, thereby reducing the risk of the first tab 11 being damaged by pressure.

In this embodiment, the second recess 43 is provided, so that the weight of the current collecting member 40 can be reduced, and the energy density of the battery cell 7 can be improved.

In some embodiments, the first current collecting portion 41 and the second current collecting portion 42 are formed as an integrated structure, so that the process for connecting the first current collecting portion 41 to the second current collecting portion 42 can be omitted, and the resistance therebetween can be reduced.

In some embodiments, the current collecting member 40 is fabricated by stamping metal plate. The metal plate forms the second recess 43 and the second current collecting portion 42 at stamped positions.

In some embodiments, in the thickness direction Z of the wall, the first current collecting portion 41 is spaced apart from the electrode terminal 30.

In the assembling of the electrode terminal 30 and the current collecting member 40, the second current collecting portion 42 needs to press against the bottom surface 312 of the first recess. If the first current collecting portion 41 is also in contact with the electrode terminal 30, over-positioning occurs between the electrode terminal 30 and the current collecting member 40, and it is difficult to ensure that the second current collecting portion 42 is in close contact with the bottom surface 312 of the first recess. In this embodiment, the first current collecting portion 41 is spaced apart from the electrode terminal 30 to prevent the first current collecting portion 41 from interfering with the second current collecting portion 42 being abutted against the bottom surface 312 of the first recess, so that a good connection strength between the current collecting member 40 and the electrode terminal 30 is ensured.

In some embodiments, the first current collecting portion 41 is abutted against and welded to the first tab 11, and the second current collecting portion 42 is abutted against and welded to the bottom surface 312 of the first recess.

In this embodiment, the welding can reduce the contact resistance between the first current collecting portion 41 and the first tab 11 and the contact resistance between the second current collecting portion 42 and the electrode terminal 30, thereby improving the current flow allowance.

In some embodiments, the first current collecting portion 41 and the first tab 11 may be connected by laser welding, and the second current collecting portion 42 and the bottom surface 312 of the first recess may be connected by resistance welding.

In some embodiments, the electrode assembly 10 includes a winding center hole 14, the winding center hole 14 is configured to be positioned corresponding to the second current collecting portion 42, and the winding center hole is configured to be penetrated by an external welding part to weld the second current collecting portion 42 to the bottom surface 312 of the first recess.

The electrode assembly 10 is made by winding the first electrode plate, the second electrode plate and the separator on a winding tool. After the electrode assembly 10 is shaped by winding, the winding tool is pulled out from the electrode assembly 10. After the winding tool is pulled out, a winding center hole 14 is formed in the middle of the electrode assembly 10.

The winding center hole 14 penetrates the first tab 11, the main body portion 12, and the second tab 13 along the axial direction of the electrode assembly 10.

In the present embodiment, the winding center hole 14 can provide a clearance space for the external welding part, so that the external welding part can pass through the electrode assembly 10 and weld the second current collecting portion 42 to the bottom surface 312 of the first recess.

In some embodiments, conductive glue is provided in the first recess 31. The conductive glue connects the second current collecting portion 42 to the electrode terminal 30 to realize an electrical connection between the current collecting member 40 and the electrode terminal 30.

In the assembling of the electrode terminal 30 and the current collecting member 40, the first recess 31 may be filled with the conductive glue in advance, and after the second current collecting portion 42 extends into the first recess 31, the second current collecting portion 42 squeezes the conductive glue, and the conductive glue connects the second current collecting portion 42 to the electrode terminal 30.

In this embodiment, the second current collecting portion 42 and the electrode terminal 30 are connected by the conductive glue, instead of welding the second current collecting portion 42 to the electrode terminal 30, so that the difficulty for connecting the second current collecting portion 42 to the electrode terminal 30 can be lowered.

In some embodiments, the battery cell 7 further includes an insulating sheet 60 surrounding an outside of the second current collecting portion 42 and at least partially clamped between the first current collecting portion 41 and the electrode terminal 30.

In this embodiment, the insulating sheet 60 clamped between the first current collecting portion 41 and the electrode terminal 30 is provided, so that the first recess 31 can be sealed, and the risk of material leakage from the first recess 31 can be reduced. For example, when the second current collecting portion 42 is welded to the electrode terminal 30, the insulating sheet 60 can seal at least a part of the particles generated by welding in the first recess 31, so that the risk of particles falling into the electrode assembly 10 is reduced and the potential safety hazard is reduced. When the second current collecting portion 42 and the electrode terminal 30 are connected by conductive glue, the insulating sheet 60 can seal the conductive glue in the first recess 31, so that the risk of leakage of the conductive glue into the electrode assembly 10 is reduced and the potential safety hazard is reduced.

In some embodiments, the insulating sheet 60 is elastic and is configured to be elastically deformed when squeezed by the first current collecting portion 41 and the electrode terminal 30.

In the process of pressing the second current collecting portion 42 against the bottom surface 312 of the first recess, the electrode terminal 30 squeezes the insulating sheet 60, and the insulating sheet 60 can be elastically deformed to prevent the insulating sheet 60 from interfering with the second current collecting portion 42 being abutted against the bottom surface 312 of the first recess, which ensures a good connection strength between the current collecting member 40 and the electrode terminal 30.

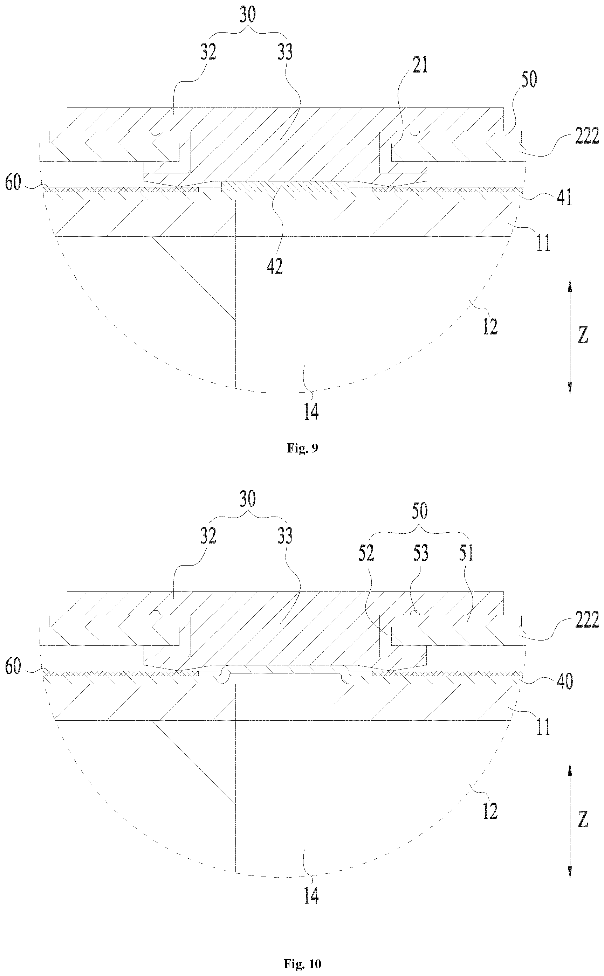

Fig. 9 is a partial cross-sectional schematic diagram of a battery cell according to some other embodiments of the present application.

As shown in Fig. 9, in some embodiments, the second current collecting portion 42 is a non-hollow structure.

In this embodiment, the second current collecting portion 42 is provided as a non-hollow structure, which can improve the overcurrent capacity of the second current collecting portion 42. The second current collecting portion 42 can be welded to the electrode terminal 30 by means of resistance welding. During the process of resistance welding, the second current collecting portion 42 of the non-hollow structure generates more heat, which facilitates the welding of the second current collecting portion 42 to the electrode terminal 30, and reduces the difficulty of welding the second current collecting portion 42 to the electrode terminal 30.

The first current collecting portion 41 and the second current collecting portion 42 may be integrally formed, for example, a solid second current collecting portion 42 may be milled on a metal plate.

In some embodiments, the first current collecting portion 41 and the second current collecting portion 42 are independent structures from each otherand are connected by welding.

In this embodiment, the process of welding the first current collecting portion 41 to the second current collecting portion 42 is simple, which helps to save materials and reduce costs. For example, in the shaping method by milling, a part of the material of the metal plate needs to be removed by milling, which will cause material waste. In the shaping method by welding, a larger metal plate is directly welded to a smaller metal block and no material needs to be removed, which can save materials and reduce costs.

Fig. 10 is a partial cross-sectional schematic diagram of a battery cell according to yet some other embodiments of the present application.

As shown in Fig. 10, in some embodiments, the sealing member 50 further includes a second protrusion 53 protruding from a surface of the first sealing portion 51 that faces the limiting portion 32 and surrounding the body portion 33. The second protrusion 53 is configured to press against the limiting portion 32 to seal the electrode lead-out hole 21.

In this embodiment, the second protrusion 53 protrudes from the first sealing portion 51. When the limiting portion 32 and the wall clamp the first sealing portion 51, the limiting portion 32 compresses both of the second protrusion 53 and the first sealing portion 51, thereby increasing the compression of the sealing member 50 at the second protrusion 53 and improves the sealing performance.

In some embodiments, the projection of the second protrusion 53 along the thickness direction Z of the wall is within the projection of the folded edge structure 34 along the thickness direction Z.

In this embodiment, the projection of the second protrusion 53 along the thickness direction Z of the wall is within the projection of the folded edge structure 34 along the thickness direction Z, so that the second protrusion and the first sealing portion 51 can be clamped by the limiting portion 32 and the folded edge structure 34 from both sides, which increases the compression of the sealing member 50 at the second protrusion and improves the sealing performance.

In some embodiments, in the radial direction of the wall, the minimum distance between the second protrusion 53 and the body portion 33 is smaller than the minimum distance between the second protrusion 53 and the outer edge of the limiting portion 32.

In this embodiment, the minimum distance between the second protrusion 53 and the body portion 33 is smaller than the minimum distance between the second protrusion 53 and the outer edge of the limiting portion 32, which can reduce the torque received by the limiting portion 32, and reduce the risk of warping and deformation of the limiting portion 32.

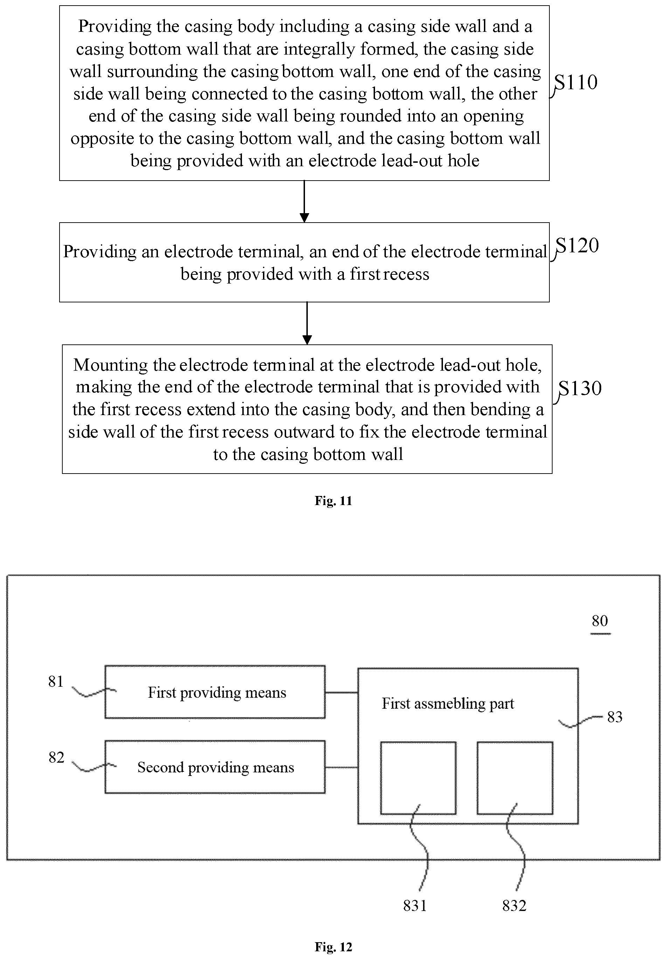

Fig. 11 is a schematic flowchart of a method for assembling a casing body and an electrode terminal according to some embodiments of the present application.

As shown in Fig. 11, the method for assembling the case and the electrode terminal according to an embodiment of the present application includes:
S110: providing the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, and the casing bottom wall being provided with an electrode lead-out hole;
S120: providing an electrode terminal, an end of the electrode terminal being provided with a first recess; and
S130: mounting the electrode terminal at the electrode lead-out hole, making the end of the electrode terminal that is provided with the first recess extend into the casing body, and then bending a side wall of the first recess outward to fix the electrode terminal to the casing bottom wall.

In the method according to this embodiment, the first recess is provided at the end of the electrode terminal, and the side wall of the first recess is bent outward so that the electrode terminal is fixed to the casing bottom wall. The squeezed part of the electrode terminal is the side wall of the first recess, and the side wall of the first recess is a wall-shaped structure and is easy to be bent, so that the pressure to which the electrode terminal is subjected during the shaping process can be reduced, stress concentration can be reduced, and mounting difficulty of the electrode terminal can be reduced. During the process of fixing the electrode terminal to the casing bottom wall, the side wall of the first recess is squeezed by the external device, so that the risk of the bottom surface of the first recess being deformed during the bending of the side wall of the first recess can be reduced.

In some embodiments, the "bending the side wall of the first recess outward" in step S130 includes: making a first pressing block extend into the first recess and spreading the side wall of the first recess, to make the side wall of the first recess tilt outward, squeezing the side wall of the first recess by a second pressing block, to make the side wall of the first recess bend toward the casing bottom wall.

If the side wall of the first recess is directly squeezed by the second pressing block, the bending direction of the side wall of the first recess is uncertain, and the side wall of the first recess may bend inwardly relative to the first recess.

In this embodiment, after the first pressing block extends into the first recess, the side wall of the first recess is gradually spread, so that the side wall of the first recess is inclined outward. After the side wall of the first recess is inclined outward, the second pressing block can more easily press against the inner wall surface of the side wall of the first recess, so that the side wall of the first recess can be bent along a preset direction.

It should be noted that, for the structure assembled by the above method, reference may be made to the casing body and the electrode terminal of the battery cell provided in the above embodiments.

When assembling the casing body and the electrode terminal according to the above-mentioned method, it is not necessary to carry out the steps in the above-mentioned order, that is, the steps may be carried out in an order mentioned in the embodiments, or in an order different from that mentioned in the embodiments, or several steps may be performed simultaneously. For example, the execution of steps S110 and S120 is in no particular order, and may also be performed simultaneously.

Fig. 12 is a schematic block diagram of an assembly apparatus including a casing body and an electrode terminal according to some embodiments of the present application.

As shown in Fig. 12, the apparatus 80 for assembling the casing body and the electrode terminal according to an embodiment of the present application includes:
a first providing means for providing the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, and the casing bottom wall being provided with an electrode lead-out hole;
a second providing means 82 for providing the electrode terminal 30, an end of the electrode terminal being provided with a first recess; and
a assembling part 83 for mounting the electrode terminal at the electrode lead-out hole, making the end of the electrode terminal that is provided with the first recess extend into the casing body, and then bending a side wall of the first recess outward to fix the electrode terminal to the casing bottom wall.

In some embodiments, the first assembling part 83 includes a first pressing block 831 and a second pressing block 832. The first pressing block 831 is configured to extend into the first recess and spread the side wall of the first recess to make the side wall of the first recess tilt outward. The second pressing block 832 is configured to squeeze the side wall of the first recess to make the side wall of the first recess bend toward the casing bottom wall.

In this embodiment, after the first pressing block 831 extends into the first recess, the side wall of the first recess is gradually spread, so that the side wall of the first recess is inclined outward. After the side wall of the first recess is inclined outward, the second pressing block 832 can more easily press against the inner wall surface of the side wall of the first recess, so that the side wall of the first recess can be bent along a preset direction.

For the structure assembled by the above apparatus, reference may be made to the casing body and the electrode terminal of the battery cell provided in the above embodiments.

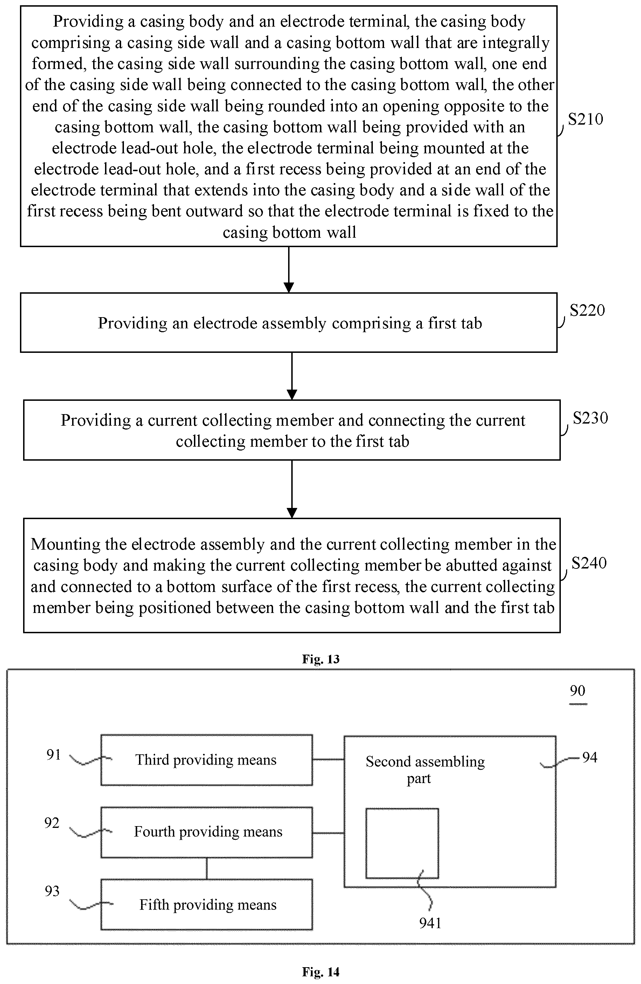

Fig. 13 is a schematic flowchart of a method for manufacturing a battery cell according to some embodiments of the present application.

As shown in Fig. 13, the method for manufacturing the battery cell according to the embodiments of the present application includes:
S210: providing a casing body and an electrode terminal, the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, the casing bottom wall being provided with an electrode lead-out hole, providing a first recess on an end of the electrode terminal that extends into the casing body, bending and folding the first recess outward so as to fix the electrode terminal at the casing bottom wall;
S220: providing an electrode assembly including a first tab;
S230: providing a current collecting member and connecting the current collecting member to the first tab;
S240: mounting the electrode assembly and the current collecting member in the casing body and making the current collecting member be abutted against and connected to a bottom surface of the first recess, the current collecting member being positioned between the casing bottom wall and the first tab.

In some embodiments, the electrode assembly including a winding center hole. "The making the current collecting member be abutted against and connected to a bottom surface of the first recess" in the step S240 includes: putting a welding part into the casing body from the opening and making the welding part passing through the winding center hole to weld the current collecting member to the bottom surface of the first recess.

In this embodiment, the winding center hole can provide a clearance space for the external welding part, so that the external welding part can pass through the electrode assembly and weld the current collecting member to the bottom surface of the first recess.

It should be noted that, for the structure of the battery cell manufactured by the above-mentioned method, reference may be made to the battery cell provided in the above-mentioned embodiments.

When manufacturing the battery cell according to the above-mentioned method, it is not necessary to carry out the steps in the above-mentioned order, that is, the steps may be carried out in an order mentioned in the embodiments, or in an order different from that mentioned in the embodiments, or several steps may be performed simultaneously. For example, the execution of steps S210 and S220 is in no particular order, and may also be performed simultaneously.

Fig. 14 is a schematic block diagram of a system for manufacturing a battery cell according to some embodiments of the present application.

As shown in Fig. 14, the system 90 for manufacturing the battery cell according to the embodiments of the present application includes:
a third providing means 91 for providing a casing body and an electrode terminal, the casing body including a casing side wall and a casing bottom wall that are integrally formed, the casing side wall surrounding the casing bottom wall, one end of the casing side wall being connected to the casing bottom wall, the other end of the casing side wall encircling to form an opening opposite to the casing bottom wall, the casing bottom wall being provided with an electrode lead-out hole, providing a first recess on an end of the electrode terminal that extends into the casing body, bending and folding the first recess outward so as to fix the electrode terminal at the casing bottom wall;
a fourth providing means 92 for providing an electrode assembly including a first tab;
a fifth providing means 93 for providing a current collecting member and connecting the current collecting member to the first tab;
a second assembling part 94 for mounting the electrode assembly and the current collecting member in the casing body and making the current collecting member be abutted against and connected to a bottom surface of the first recess, the current collecting member being positioned between the casing bottom wall and the first tab.

In some embodiments, the electrode assembly including a winding center hole. The second assembly part 94 includes a welding part 941 configured to enter the casing body from the opening and pass through the winding center hole to weld the current collecting member to the bottom surface of the first recess.

In this embodiment, the winding center hole can provide a clearance space for the welding part 941, so that the welding part 941 can pass through the electrode assembly and weld the current collecting member to the bottom surface of the first recess.

For a related structure of a battery cell manufactured by the above-mentioned system for manufacturing a battery cell, reference may be made to the battery cell provided in the above-mentioned embodiments.

## Claims

1. A battery cell (7), comprising:
an electrode assembly (10) comprising a first tab (11);
a casing (20) for accommodating the electrode assembly (10), the casing (20) comprising a wall provided with an electrode lead-out hole (21);
an electrode terminal (30) mounted at the electrode lead-out hole (21); and
a current collecting member (40) positioned between the wall and the first tab (11) and configured to connect the electrode terminal (30) and the first tab (11);
wherein the battery cell (7) is **characterized in that**:
a first recess (31) is provided at an end of the electrode terminal (30) that faces the first tab (11), a side wall (311) of the first recess (31) is bent outward so that the electrode terminal (30) is fixed to the wall, and the current collecting member (40) is abutted against and connected to a bottom surface (312) of the first recess (31),
the bottom surface (312) of the first recess (31) is a flat surface,
the electrode terminal (30) comprises:
a limiting portion (32) positioned on a side of the wall that is away from the first tab (11); and
a body portion (33) being connected to a surface of the limiting portion (32) that faces the wall and passing through the electrode lead-out hole (21), an end of the body portion (33) that faces the first tab (11) being provided with the first recess (31) and a folded edge structure (34), the folded structure being formed by bending the side wall (311) of the first recess (31) outward,
the limiting portion (32) and the folded edge structure (34) are configured to clamp a part of the side wall (311) to fix the electrode terminal (30) to the wall,
the current collecting member (40) comprises a first current collecting portion (41) and a second current collecting portion (42) connected to the first current collecting portion (41), the first current collecting portion (41) is configured to be connected to the first tab (11) to realize an electrical connection between the current collecting member (40) and the first tab (11), and the second current collecting portion (42) is configured to be connected to the electrode terminal (30) to realize an electrical connection between the current collecting member (40) and the electrode terminal (30), and
the second current collecting portion (42) protrudes from a surface of the first current collecting portion (41) that faces the electrode terminal (30), to extend into the first recess (31) and abut against the bottom surface (312) of the first recess (31).

2. The battery cell (7) according to claim 1, wherein in a radial direction of the wall, a size of the limiting portion (32) is larger than a size of the folded edge structure (34).

3. The battery cell (7) according to claim 1 or 2, wherein in the radial direction of the wall, a thickness of at least a part of the folded edge structure (34) that extends from an outer end surface (341) of the folded edge structure (34) gradually increases from an outer side to an inner side of the folded edge structure (34).

4. The battery cell (7) according to claim 3, wherein at least a part of a surface of the folded edge structure (34) that faces the first tab (11) is an inclined surface (342), and the inclined surface (342) is connected to the outer end surface (341) and is inclined toward the electrode assembly (10).

5. The battery cell (7) according to claims 1 to 4, wherein in a thickness direction (Z) of the wall, the bottom surface (312) of the first recess (31) is closer to the first tab (11) compared to an inner surface of the wall.

6. The battery cell (7) according to any one of claims 1 to 5, further comprising a sealing member (50) disposed between the wall and the electrode terminal (30) and configured to seal the electrode lead-out hole (21).

7. The battery cell (7) according to claim 6, wherein the sealing member (50) comprises a first sealing portion (51) surrounding an outside of the body portion (33) and positioned between the wall and the limiting portion (32);
the electrode terminal (30) further includes a first protrusion (35) protruding from a surface of the limiting portion (32) that faces the first sealing portion (51) and surrounding the body portion (33), and the first protrusion (35) is configured to press against the first sealing portion (51) to seal the electrode lead-out hole (21); and/or the sealing member (50) further includes a second protrusion protruding from a surface of the first sealing portion (51) that faces the limiting portion (32) and surrounding the body portion (33), and the second protrusion is configured to press against the limiting portion (32) to seal the electrode lead-out hole (21).

8. The battery cell (7) according to claim 7, wherein
a projection of the first protrusion (35) along the thickness direction (Z) of the wall lying within a projection of the folded edge structure (34) along the thickness direction (Z); and/or
a projection of the second protrusion along the thickness direction (Z) of the wall lying within the projection of the folded edge structure (34) along the thickness direction (Z).

9. The battery cell (7) according to claim 7 or 8, wherein
in a radial direction of the wall, a minimum distance between the first protrusion (35) and the body portion (33) is smaller than a minimum distance between the first protrusion (35) and an outer edge of the limiting portion (32); and/or in the radial direction of the wall, a minimum distance between the second protrusion and the body portion (33) is smaller than a minimum distance between the second protrusion and the outer edge of the limiting portion (32).

10. The battery cell (7) according to any one of claims 6 to 9, wherein the electrode assembly (10) further comprises a second tab having a polarity opposite to a polarity of the first tab (11), the second tab is electrically connected to the wall;
the sealing member (50) insulates and separates the wall from the electrode terminal (30).

11. The battery cell (7) according to claim 1, wherein a second recess (43) is formed at a position of the current collecting member (40) that corresponds to the second current collecting portion (42), and the second recess (43) is recessed from a surface of the first current collecting portion (41) that faces the first tab (11) along a direction away from the first tab (11).

12. The battery cell (7) according to claim 1 or 11, wherein the first current collecting portion (41) and the second current collecting portion (42) are integrally formed.

13. The battery cell (7) according to any one of claims 1 or 11 to 12, wherein the first current collecting portion (41) is abutted against and welded to the first tab (11), and the second current collecting portion (42) is abutted against and welded to the bottom surface of the first recess (31).

14. The battery cell (7) according to claim 13, wherein the electrode assembly (10) comprises a winding center hole (14), the winding center hole (14) is configured to be corresponding to a position of the second current collecting portion (42), and the winding center hole (14) is configured to be penetrated by an external welding part to weld the second current collecting portion (42) to the bottom surface of the first recess (31).

15. The battery cell (7) according to any one of claims 13 to 14, further comprising an insulating sheet (60) surrounding an outside of the second current collecting portion (42) and being at least partially clamped between the first current collecting portion (41) and the electrode terminal (30).

16. The battery cell (7) according to any one of claims 1 to 15, wherein the casing (20) comprises a cover plate (23) and a casing body (22), the casing body (22) comprises a casing side wall (221) and a casing bottom wall (222) that are integrally formed, the casing side wall (221) surrounds the casing bottom wall (222), one end of the casing side wall (222) is connected to the casing bottom wall (222), the other end of the casing side wall (221) encircles to form an opening (223) opposite to the casing bottom wall (222), and the opening (223) is covered by the cover plate (23);
the wall is the casing bottom wall (222) or the cover plate (23).

17. A battery comprising a plurality of the battery cells (7) according to any one of claims 1 to 16.

## Patentansprüche

1. Eine Batteriezelle (7), umfassend:
eine Elektrodenanordnung (10), die eine erste Lasche (11) umfasst;
ein Gehäuse (20) zur Aufnahme der Elektrodenanordnung (10), wobei das Gehäuse (20) eine Wand umfasst, die mit einem Elektrodenausführungsloch (21) versehen ist;
einen Elektrodenanschluss (30), der an dem Elektrodenausführungsloch (21) angebracht ist; und
ein Stromsammelglieder (40), das zwischen der Wand und der ersten Lasche (11) angeordnet ist und dazu konfiguriert ist, den Elektrodenanschluss (30) und die erste Lasche (11) zu verbinden;
wobei die Batteriezelle (7) **dadurch gekennzeichnet ist, dass**:
eine erste Aussparung (31) an einem Ende des Elektrodenanschlusses (30) vorgesehen ist, das der ersten Lasche (11) zugewandt ist, eine Seitenwand (311) der ersten Aussparung (31) nach außen gebogen ist, so dass der Elektrodenanschluss (30) an der Wand befestigt ist, und das Stromsammelglieder (40) an einer Bodenfläche (312) der ersten Aussparung (31) anliegt und mit dieser verbunden ist,
die Bodenfläche (312) der ersten Aussparung (31) eine flache Fläche ist,
der Elektrodenanschluss (30) umfasst:
einen Begrenzungsabschnitt (32), der auf einer Seite der Wand angeordnet ist, die von der ersten Lasche (11) entfernt ist; und
einen Körperabschnitt (33), der mit einer Oberfläche des Begrenzungsabschnitts (32) verbunden ist, die der Wand zugewandt ist und durch das Elektrodenausführungsloch (21) verläuft, wobei ein zur ersten Lasche (11) zugewandtes Ende des Körperabschnitts (33) mit der ersten Aussparung (31) und einer gefalteten Randstruktur (34) versehen ist, wobei die gefaltete Struktur durch Biegen der Seitenwand (311) der ersten Aussparung (31) nach außen gebildet wird,
der Begrenzungsabschnitt (32) und die gefaltete Randstruktur (34) dazu konfiguriert sind, einen Teil der Seitenwand (311) einzuklemmen, um den Elektrodenanschluss (30) an der Wand zu befestigen,
das Stromsammelglied (40) einen ersten Stromsammelabschnitt (41) und einen zweiten Stromsammelabschnitt (42) umfasst, der mit dem ersten Stromsammelabschnitt (41) verbunden ist, der erste Stromsammelabschnitt (41) dazu konfiguriert ist, mit der ersten Lasche (11) verbunden zu werden, um eine elektrische Verbindung zwischen dem Stromsammelglied (40) und der ersten Lasche (11) herzustellen, und der zweite Stromsammelabschnitt (42) dazu konfiguriert ist, mit dem Elektrodenanschluss (30) verbunden zu werden, um eine elektrische Verbindung zwischen dem Stromsammelglied (40) und dem Elektrodenanschluss (30) herzustellen, und
der zweite Stromsammelabschnitt (42) von einer Oberfläche des ersten Stromsammelabschnitts (41), die dem Elektrodenanschluss (30) zugewandt ist, vorsteht, um sich in die erste Aussparung (31) zu erstrecken und an der Bodenfläche (312) der ersten Aussparung (31) anzuliegen.

2. Batteriezelle (7) nach Anspruch 1, wobei in einer radialen Richtung der Wand eine Größe des Begrenzungsabschnitts (32) größer als eine Größe der gefalteten Randstruktur (34) ist.

3. Batteriezelle (7) nach Anspruch 1 oder 2, wobei in der radialen Richtung der Wand eine Dicke von mindestens einem Teil der gefalteten Randstruktur (34), die sich von einer äußeren Endfläche (341) der gefalteten Randstruktur (34) erstreckt, allmählich von einer äußeren Seite zu einer inneren Seite der gefalteten Randstruktur (34) zunimmt.

4. Batteriezelle (7) nach Anspruch 3, wobei mindestens ein Teil einer Oberfläche der gefalteten Randstruktur (34), die der ersten Lasche (11) zugewandt ist, eine geneigte Oberfläche (342) ist, und die geneigte Oberfläche (342) mit der äußeren Endfläche (341) verbunden ist und zur Elektrodenanordnung (10) hingeneigt ist.

5. Batteriezelle (7) nach einem der Ansprüche 1 bis 4, wobei in einer Dickenrichtung (Z) der Wand die Bodenfläche (312) der ersten Aussparung (31) im Vergleich zu einer Innenfläche der Wand näher an der ersten Lasche (11) liegt.

6. Batteriezelle (7) nach einem der Ansprüche 1 bis 5, ferner umfassend ein Dichtungselement (50), das zwischen der Wand und dem Elektrodenanschluss (30) angeordnet und dazu konfiguriert ist, das Elektrodenausführungsloch (21) abzudichten.

7. Batteriezelle (7) nach Anspruch 6, wobei das Dichtungselement (50) einen ersten Dichtungsabschnitt (51) umfasst, der eine Außenseite des Körperabschnitts (33) umgibt und zwischen der Wand und dem Begrenzungsabschnitt (32) angeordnet ist;
der Elektrodenanschluss (30) ferner einen ersten Vorsprung (35) aufweist, der von einer Oberfläche des Begrenzungsabschnitts (32) vorsteht, die dem ersten Dichtungsabschnitt (51) zugewandt ist und den Körperabschnitt (33) umgibt, und der erste Vorsprung (35) dazu konfiguriert ist, gegen den ersten Dichtungsabschnitt (51) zu drücken, um das Elektrodenausführungsloch (21) abzudichten; und/oder das Dichtungselement (50) ferner einen zweiten Vorsprung aufweist, der von einer Oberfläche des ersten Dichtungsabschnitts (51) vorsteht, die dem Begrenzungsabschnitt (32) zugewandt ist und den Körperabschnitt (33) umgibt, und der zweite Vorsprung dazu konfiguriert ist, gegen den Begrenzungsabschnitt (32) zu drücken, um das Elektrodenausführungsloch (21) abzudichten.

8. Batteriezelle (7) nach Anspruch 7, wobei
eine Projektion des ersten Vorsprungs (35) entlang der Dickenrichtung (Z) der Wand innerhalb einer Projektion der gefalteten Randstruktur (34) entlang der Dickenrichtung (Z) liegt; und/oder
eine Projektion des zweiten Vorsprungs entlang der Dickenrichtung (Z) der Wand innerhalb der Projektion der gefalteten Randstruktur (34) entlang der Dickenrichtung (Z) liegt.

9. Batteriezelle (7) nach Anspruch 7 oder 8, wobei
in einer radialen Richtung der Wand ein minimaler Abstand zwischen dem ersten Vorsprung (35) und dem Körperabschnitt (33) kleiner als ein minimaler Abstand zwischen dem ersten Vorsprung (35) und einem äußeren Rand des Begrenzungsabschnitts (32) ist; und/oder in der radialen Richtung der Wand ein minimaler Abstand zwischen dem zweiten Vorsprung und dem Körperabschnitt (33) kleiner als ein minimaler Abstand zwischen dem zweiten Vorsprung und dem äußeren Rand des Begrenzungsabschnitts (32) ist.

10. Batteriezelle (7) nach einem der Ansprüche 6 bis 9, wobei die Elektrodenanordnung (10) ferner eine zweite Lasche mit einer Polarität aufweist, die der Polarität der ersten Lasche (11) entgegengesetzt ist, wobei die zweite Lasche elektrisch mit der Wand verbunden ist;
das Dichtungselement (50) die Wand von dem Elektrodenanschluss (30) isoliert und trennt.

11. Batteriezelle (7) nach Anspruch 1, wobei eine zweite Aussparung (43) an einer Position des Stromsammelteils (40) ausgebildet ist, die dem zweiten Stromsammelabschnitt (42) entspricht, und die zweite Aussparung (43) von einer Oberfläche des ersten Stromsammelabschnitts (41), die der ersten Lasche (11) zugewandt ist, entlang einer Richtung weg von der ersten Lasche (11) zurückgesetzt ist.

12. Batteriezelle (7) nach Anspruch 1 oder 11, wobei der erste Stromsammelabschnitt (41) und der zweite Stromsammelabschnitt (42) einstückig ausgebildet sind.

13. Batteriezelle (7) nach einem der Ansprüche 1 oder 11 bis 12, wobei der erste Stromsammelabschnitt (41) an der ersten Lasche (11) anliegt und mit dieser verschweißt ist, und der zweite Stromsammelabschnitt (42) an der Bodenfläche der ersten Aussparung (31) anliegt und mit dieser verschweißt ist.

14. Batteriezelle (7) nach Anspruch 13, wobei die Elektrodenanordnung (10) ein mittleres Wickelloch (14) aufweist, wobei das mittlere Wickelloch (14) dazu konfiguriert ist, einer Position des zweiten Stromsammelabschnitts (42) zu entsprechen, und wobei das mittlere Wickelloch (14) dazu konfiguriert ist, von einem externen Schweißteil durchdrungen zu werden, um den zweiten Stromsammelabschnitt (42) mit der Bodenfläche der ersten Aussparung (31) zu verschweißen.

15. Batteriezelle (7) nach einem der Ansprüche 13 bis 14, ferner umfassend eine Isolierfolie (60), die eine Außenseite des zweiten Stromsammelteils (42) umgibt und zumindest teilweise zwischen dem ersten Stromsammelteil (41) und dem Elektrodenanschluss (30) eingeklemmt ist.

16. Batteriezelle (7) nach einem der Ansprüche 1 bis 15, wobei das Gehäuse (20) eine Abdeckplatte (23) und einen Gehäusekörper (22) umfasst, wobei der Gehäusekörper (22) eine Gehäuseseitenwand (221) und eine Gehäusebodenwand (222) umfasst, die einstückig ausgebildet sind, wobei die Gehäuseseitenwand (221) die Gehäusebodenwand (222) umgibt, ein Ende der Gehäuseseitenwand (222) mit der Gehäusebodenwand (222) verbunden ist, das andere Ende der Gehäuseseitenwand (221) umläuft, um eine Öffnung (223) gegenüber der Gehäusebodenwand (222) zu bilden, und die Öffnung (223) durch die Abdeckplatte (23) abgedeckt ist;
die Wand die Gehäusebodenwand (222) oder die Abdeckplatte (23) ist.

17. Batterie mit mehreren Batteriezellen (7) nach einem der Ansprüche 1 bis 16.

## Revendications

1. Cellule de batterie (7), comprenant :
un composant d'électrode (10) comprenant une première languette (11) ;
une gaine (20) pour accueillir le composant d'électrode (10), la gaine (20) comprenant une paroi pourvue d'un trou de sortie d'électrode (21) ;
une borne d'électrode (30) montée au trou de sortie d'électrode (21) ; et
un collecteur de courant (40) positionné entre la paroi et la première languette (11) et configuré pour connecter la borne d'électrode (30) et la première languette (11) ;
dans laquelle la cellule de batterie (7) se **caractérise en ce que** :
un premier évidement (31) est prévu à une extrémité de la borne d'électrode (30) en face de la première languette (11), une paroi latérale (311) du premier évidement (31) se courbe vers l'extérieur de sorte que la borne d'électrode (30) soit fixée à la paroi, et le collecteur de courant (40) s'appuie contre et est connecté à une surface inférieure (312) du premier évidement (31),
la surface inférieure (312) du premier évidement (31) est une surface plane,
la borne d'électrode (30) comprend :
une portion de limitation (32) positionnée sur un côté de la paroi éloigné de la première languette (11) ; et
une portion de corps (33) connectée à une surface de la portion de limitation (32) en face de la paroi et passant à travers le trou de sortie d'électrode (21), une extrémité de la portion de corps (33) en face de la première languette (11) étant pourvue du premier évidement (31) et d'une structure de bord plié (34), et la structure pliée étant formée en courbant la paroi latérale (311) du premier évidement (31) vers l'extérieur,
la portion de limitation (32) et la structure de bord plié (34) sont configurées pour serrer une portion de paroi latérale (311) pour fixer la borne d'électrode (30) à la paroi,
le collecteur de courant (40) comprend une première portion de collection de courant (41) et une seconde portion de collection de courant (42) connectée à la première portion de collection de courant (41), la première portion de collection de courant (41) est configurée pour être connectée à la première languette (11) afin de réaliser une connexion électrique entre le collecteur de courant (40) et la première languette (11), et la seconde portion de collection de courant (42) est configurée pour être connectée à la borne d'électrode (30) afin de réaliser une connexion électrique entre le collecteur de courant (40) et la borne d'électrode (30), et
la seconde portion de collection de courant (42) fait saillie d'une surface de la première portion de collection de courant (41) en face de la borne d'électrode (30), pour s'étendre dans le premier évidement (31) et s'appuyer contre la surface inférieure (312) du premier évidement (31).

2. Cellule de batterie (7) selon la revendication 1, dans laquelle, dans une direction radiale de la paroi, une dimension de la portion de limitation (32) est supérieure à une dimension de la structure de bord plié (34).

3. Cellule de batterie (7) selon la revendication 1 ou 2, dans laquelle dans la direction radiale de la paroi, une épaisseur d'au moins une partie de la structure de bord plié (34) qui s'étend à partir d'une surface d'extrémité extérieure (341) de la structure de bord plié (34) augmente progressivement d'un côté extérieur à un côté intérieur de la structure de bord plié (34).

4. Cellule de batterie (7) selon la revendication 3, dans laquelle au moins une partie d'une surface de la structure de bord plié (34) en face de la première languette (11) est une surface inclinée (342), et la surface inclinée (342) est connectée à la surface d'extrémité extérieure (341) et est inclinée vers le composant d'électrode (10).

5. Cellule de batterie (7) selon les revendications 1 à 4, dans laquelle dans une direction d'épaisseur (Z) de la paroi, la surface inférieure (312) du premier évidement (31) est plus proche de la première languette (11) par rapport à une surface intérieure de la paroi.

6. Cellule de batterie (7) selon l'une quelconque des revendications 1 à 5, comprenant en outre un élément d'étanchéité (50) disposé entre la paroi et la borne d'électrode (30) et configuré pour étancher le trou de sortie d'électrode (21).

7. Cellule de batterie (7) selon la revendication 6, dans laquelle l'élément d'étanchéité (50) comprend une première portion d'étanchéité (51) entourant une partie extérieure de la portion de corps (33) et positionnée entre la paroi et la portion de limitation (32) ;
la borne d'électrode (30) comprend en outre une première saillie (35) faisant saille d'une surface de la portion de limitation (32) en face de la première portion d'étanchéité (51) et entourant la portion de corps (33), et la première saillie (35) est configurée pour s'appuyer contre la première portion d'étanchéité (51) afin d'étancher le trou de sortie d'électrode (21) ; et/ou l'élément d'étanchéité (50) comprend en outre une seconde saillie faisant saille d'une surface de la première portion d'étanchéité (51) en face de la portion de limitation (32) et entourant la portion de corps (33), et la seconde saillie est configurée pour s'appuyer contre la portion de limitation (32) afin d'étancher le trou de sortie d'électrode (21).

8. Batterie de batterie (7) selon la revendication 7, dans lequel,
une projection de la première saillie (35) le long de la direction d'épaisseur (Z) de la paroi située à l'intérieur d'une projection de la structure de bord plié (34) le long de la direction d'épaisseur (Z) ; et/ou
une projection de la seconde saillie le long de la direction d'épaisseur (Z) de la paroi située à l'intérieur de la projection de la structure de bord plié (34) le long de la direction d'épaisseur (Z).

9. Batterie de batterie (7) selon la revendication 7 ou 8, dans laquelle,
dans une direction radiale de la paroi, une distance minimale entre la première saillie (35) et la portion de corps (33) est inférieure à une distance minimale entre la première saillie (35) et un bord extérieur de la portion de limitation (32) ; et/ou dans la direction radiale de la paroi, une distance minimale entre la seconde saillie et la portion de corps (33) est inférieure à une distance minimale entre la seconde saillie et le bord extérieur de la portion de limitation (32).

10. Cellule de batterie (7) selon l'une quelconque des revendications 6 à 9, dans laquelle le composant d'électrode (10) comprend en outre une seconde languette ayant une polarité opposée à une polarité de la première languette (11), et la seconde languette est connectée électriquement à la paroi ;
l'élément d'étanchéité (50) isole et sépare la paroi de la borne d'électrode (30).

11. Cellule de batterie (7) selon la revendication 1, dans laquelle un second évidement (43) est formé à une position du collecteur de courant (40) qui correspond à la seconde portion de collection de courant (42), et le second évidement (43) se creuse à partir d'une surface de la première portion de collection de courant (41) en face de la première languette (11) le long d'une direction éloignée de la première languette (11).

12. Cellule de batterie (7) selon la revendication 1 ou 11, dans laquelle la première portion de collection de courant (41) et la seconde portion de collection de courant (42) sont formées de manière intégrale.

13. Cellule de batterie (7) selon l'une quelconque des revendications 1 ou 11 à 12, dans laquelle la première portion de collection de courant (41) s'appuie contre et est soudée à la première languette (11), et la seconde portion de collection de courant (42) s'appuie contre et est soudée à la surface inférieure du premier évidement (31).

14. Cellule de batterie (7) selon la revendication 13, dans laquelle le composant d'électrode (10) comprend un trou central d'enroulement (14), le trou central d'enroulement (14) est configuré pour correspondre à une position de la seconde portion de collection de courant (42), et le trou central d'enroulement (14) est configuré pour être pénétré par une pièce de soudure externe afin de souder la seconde portion de collection de courant (42) à la surface inférieure du premier évidement (31).

15. Cellule de batterie (7) selon l'une quelconque des revendications 13 à 14, comprenant en outre une feuille isolante (60) entourant une partie extérieur de la seconde portion de collection de courant (42) et étant au moins partiellement serrée entre la première portion de collection de courant (41) et la borne d'électrode (30).

16. Cellule de batterie (7) selon l'une quelconque des revendications 1 à 15, dans laquelle la gaine (20) comprend une plaque de recouvrement (23) et un corps de gaine (22), le corps de gaine (22) comprend une paroi latérale de gaine (221) et une paroi inférieure de gaine (222) qui sont formées de manière intégrale, la paroi latérale de gaine (221) entoure la paroi inférieure de gaine (222), une extrémité de la paroi latérale de gaine (222) est connectée à la paroi inférieure de gaine (222), l'autre extrémité de la paroi latérale de gaine (221) s'encercle pour former une ouverture (223) opposée à la paroi inférieure de gaine (222), et l'ouverture (223) est recouverte par la plaque de recouvrement (23) ;
la paroi est la paroi inférieure de gaine (222) ou la plaque de recouvrement (23).

17. Batterie comprenant une pluralité de cellules de batterie (7) selon l'une quelconque des revendications 1 à 16.
